(19) **Europäisches Patentamt / European Patent Office / Office européen des brevets**

(11) **EP 4 131 487 B1**

(12) # EUROPEAN PATENT SPECIFICATION

(45) Date of publication and mention
of the grant of the patent:
**15.10.2025 Bulletin 2025/42**

(21) Application number: **20966498.6**

(22) Date of filing: **24.12.2020**

(51) International Patent Classification (IPC):
$H01M\ 4/131^{(2010.01)}$   $H01M\ 4/136^{(2010.01)}$
$H01M\ 4/36^{(2006.01)}$   $H01M\ 4/62^{(2006.01)}$
$H01M\ 10/0525^{(2010.01)}$   $H01M\ 10/0568^{(2010.01)}$
$H01M\ 10/42^{(2006.01)}$   $H01M\ 4/505^{(2010.01)}$
$H01M\ 4/525^{(2010.01)}$   $H01M\ 4/58^{(2010.01)}$

(52) Cooperative Patent Classification (CPC):
H01M 10/0568; H01M 4/131; H01M 4/136;
H01M 4/364; H01M 4/366; H01M 4/62;
H01M 10/0525; H01M 10/4235; H01M 4/505;
H01M 4/525; H01M 4/5825; Y02E 60/10

(86) International application number:
**PCT/CN2020/139106**

(87) International publication number:
**WO 2022/133926 (30.06.2022 Gazette 2022/26)**

(54) **LITHIUM-ION SECONDARY BATTERY AND PREPARATION METHOD THEREFOR, BATTERY MODULE, BATTERY PACK, AND DEVICE**

LITHIUM-IONEN-SEKUNDÄRBATTERIE UND HERSTELLUNGSVERFAHREN DAFÜR, BATTERIEMODUL, BATTERIEPACK UND VORRICHTUNG

BATTERIE SECONDAIRE AU LITHIUM-ION ET SON PROCÉDÉ DE PRÉPARATION, MODULE DE BATTERIE, BLOC-BATTERIE ET DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2023 Bulletin 2023/06**

(60) Divisional application:
**25197198.2**

(73) Proprietor: **Contemporary Amperex Technology (Hong Kong) Limited**
**Central, Central And Western District (HK)**

(72) Inventors:
• **XIE, Haotian**
  **Ningde City, Fujian 352100 (CN)**
• **CHEN, Peipei**
  **Ningde City, Fujian 352100 (CN)**
• **SUN, Xin**
  **Ningde City, Fujian 352100 (CN)**

• **WANG, Bangrun**
  **Ningde City, Fujian 352100 (CN)**
• **HUANG, Jiantao**
  **Ningde City, Fujian 352100 (CN)**
• **CHEN, Xingbu**
  **Ningde City, Fujian 352100 (CN)**
• **CHEN, Xiao**
  **Ningde City, Fujian 352100 (CN)**
• **LIU, Na**
  **Ningde City, Fujian 352100 (CN)**
• **LIANG, Chengdu**
  **Ningde City, Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(56) References cited:
WO-A1-2016/123396    CN-A- 104 638 299
CN-A- 105 552 344    CN-A- 107 706 351
CN-A- 107 978 794    CN-A- 108 682 894
CN-A- 109 546 115    CN-A- 109 888 394
CN-A- 110 224 169    CN-A- 110 993 933
CN-A- 110 993 939    US-A1- 2007 141 468

- J. LI ET AL: "Improved electrochemical performance of LiMO2(M=Mn, Ni, Co)-Li2MnO3 cathode materials in ionic liquid-based electrolyte", JOURNAL OF POWER SOURCES, vol. 239, 15 April 2013 (2013-04-15), pages 490 - 495, XP028566968, ISSN: 0378-7753, DOI: 10.1016/J.JPOWSOUR.2013.04.015

- S. KOMABA ET AL: "Higher energy and safety of lithium-ion batteries with ionic liquid electrolyte", PROCEEDINGS OF SPIE, VISUAL COMMUNICATIONS AND IMAGE PROCESSING 2005, 29 April 2010 (2010-04-29), Visual Communications and Image Processing 2005, 2005, Beijing, China, pages 76830F-1 - 76830F-7, XP055017189, ISSN: 0277-786X, DOI: 10.1117/12.855629

**Description**

Technical Field

The present application relates to the technical field of batteries, and in particular to a lithium ion secondary battery and a preparation method therefor, a battery module, a battery pack and a device.

Background Art

A lithium-ion secondary battery is a rechargeable battery, which can be used continuously by activating the active material by means of charge after discharge. Specifically, the lithium ion secondary battery achieves charging and discharging by repeated deintercalation and intercalation of lithium ions between the positive electrode and negative electrode. Due to the outstanding characteristics such as high energy density, long cycling life, no pollution, and no memory effect, lithium ion secondary batteries are widely used in various electronic products, and are fast gaining popularity in large devices, such as electric vehicles and energy storage systems.

US 2007/141468 A1 discloses mixtures or "blends" of electrode active materials comprising alkali metals, transition metals, and anions such as oxides, phosphates or similar moieties, halogen or hydroxyl moieties. It describes various active materials including lithium metal phosphate-based materials, such as $LiFe_{0.95}Mg_{0.05}PO_4$.

CN 109 546 115 A discloses an NCA ternary battery having high-nickel lithium-rich materials. The positive electrode of the battery uses $aLi[Ni_xCo_yAl_{(1-x-y)}]O_2 \cdot (1-a)Li_2MnO_3$ as active materials.

WO 2016/123396 A1 describes a lithium-ion battery containing an anode and a cathode (either a lithium-manganese-rich oxide or nickel-rich oxide NMC cathode), both electrodes being enabled by a ionic liquid (IL or RTIL)-based electrolyte.

The article "Improved Electrochemical Performance of LiMO2 (M=Mn, Ni, Co)-Li2MnO3 Cathode Materials in Ionic Liquid-based Electrolyte", from Journal of Power Sources, vol. 239, 15 April 2013, investigates the performance of $LiMO_2$ (M = Mn, Ni, or Co) combined with $Li_2MnO_3$ as cathode materials for lithium-ion batteries in an ionic liquid-based electrolyte (PYR14FSI and LiTFSI).

Another article, "Higher Energy and Safety of Lithium-Ion Batteries with Ionic Liquid Electrolyte" published by Proceedings of SPIE, Visual Communications and Image, 2005, 29 April 2010, discusses the use of ionic liquid as a safe electrolyte solution for lithium-ion batteries, where a mixture of 50%wt. $LiCo_{1/3}Ni_{1/3}Mn_{1/3}O_2$ and 50%wt. $Li_2MnO_3$ is used in association with an electrolyte comprising 1M LiTFSI in PYR14TFSI.

CN 110 224 169 A discloses high energy density lithium batteries that use lithium-containing metal oxide positive electrode materials selected from $LiCoO_2$, $Li(Ni_xMn_yCo_{1-x-y})O2$ ($0 \leq x \leq 1, 0 \leq y \leq 1$), $Li(Ni_xCo_yAl_{1-x-y})O_2$ ($0 \leq x \leq 1, 0 \leq y \leq 1$), $Li_2MnO_4$, $LiMPO_4$ (M = Co, Ni, Mn, Fe), $LiMn_xFe_{1-x}PO_4$ ($0 < x < 1$), $LiNi_{0.5}Mn_{0.5}O_2$, $LiNi_{0.5}Mn_{1.5}O_4$, $aLi_2MnO_3 \cdot (1-a)Li(Ni_xMn_yCo_{1-x-y})O_2$ ($0 \leq x \leq 1, 0 \leq y \leq 1$).

CN 107 706 351 A discloses positive electrodes for batteries, which contains a positive electrode active material that can circulate and release lithium and is selected from: $LiFe_{1-x}M_xPO_4$ (M = Mn or V, and $0 \leq x \leq 1$), $LiMn_2O_4$, $LiCoO_2$, $Li_{1+x}L_{1-y-z}M_yN_zO_2$ (L, M, N = Co, Mn, Ni, Fe, Al, Mg, Ga, Ti, Cr, Cu, Zn, Mo, F, I, S, or B, $-0.1 \leq x \leq 0.2$, $0 \leq y \leq 1$, $0 \leq z \leq 1$, $0 \leq y+z \leq 1.0$), $LiNi_{0.5-x}Mn_{1.5-y}M_{x+y}O_4$ ($-0.1 \leq x \leq 0.5$, $0 \leq y \leq 1.5$, M = Li, Co, Fe, Al, Mg, Ca, Ti, Mo, Cr, Cu or Zn) or any combination thereof.

CN 107 978 794 A discloses an electrolyte of a ternary lithium battery, which includes an electrolyte comprising a mixture of LiBOB and LiFSI lithium salts and an additive mixture of FEC, MMDS and TMP; and a ternary positive electrode material coated with a mixture of nano titanium dioxide and a ternary material ($LiNi_{0.8}Co_{0.1}Mn_{0.1}O_2$) as a positive electrode.

CN 105 552 344 A discloses a lithium ion battery including an electrode containing rich lithium compounds. For example, the lithium compounds can be selected from LiMO2, Li2MO3, Li4M5O12 and Li4M2O5, where M is a transition metal.

CN 109 888 394 A discloses an electrolyte for secondary lithium battery, which contains an organic solvent, a lithium salt or an additive. The lithium salt can be selected from lithium bis(fluorosulfonyl)imide, lithium bis(trifluoromethanesulphonyl)imide, lithium bis(oxalate)borate and lithium difluoroborate.

CN 110 993 939 A discloses a lithium ion battery comprising a positive plate, a negative plate and a diaphragm. The positive plate comprises a positive current collector and cathode slurry coating the positive current collector. The cathode slurry comprises a cathode active material, a lithium supplementing material, a conductive agent and a binder in a mass percentage ratio of 96-89%:1-5%:2-3%:2-3%. The lithium supplementing material can be $Li_5FeO_4$ or $Li_2NiO$.

CN 108 682 894 A discloses a lithium ion battery manufacturing process which comprises: dispersing an adhesive into a solvent to obtain an adhesive liquid; after the adhesive is completely dispersed, sequentially adding a conductive agent, a phosphate anode material and a lithium-enriched metal oxide to obtain anode slurry; and coating an anode current collector by the anode slurry to obtain an anode piece. The lithium-enriched metal oxide is selected from one or more of $Li_5FeO_4$, $LiFe_5O_8$, $LiFeO_2$, $Li_2MoO_3$, $Li_6CoO_4$, $Li_6MnO_4$, $Li_2ZrO_3$, $Li_6Zr_2O_7$, $Li_8SiO_6$, $Li_4SiO_4$, $Li_2SiO_3$, $Li_5AlO_4$, $Li_2CuO_2$, $Li_4TiO_4$, $Li_3FeN_2$, $Li_7MnN_4$.

CN 110 993 933 A discloses a cathode material of a lithium ion battery that comprises a high-capacity cathode active material, a lithium supplementing material, a conductive agent and a binder. The lithium supplementing material is represented by $Li_xM_yN_z$, $1 \leq x \leq 8$, $1 \leq y \leq 6$, $1 \leq z \leq 6$, M is one or more of Fe, Cu, Mn, Zr, Mg and Al, and N is one or more of O, N, F, B and S.

CN 104 638 299 A discloses a secondary battery electrolyte solution having an overcharging prevention function. The electrolyte solution is formed by: lithium salt, carbonic esters and/or ethers organic solvent, overcharging prevention additive, and other functional additives, where the range of the molar concentration of lithium salt in electrolyte solution is 0.001-2 mole/L, the mass proportion range of the overcharging prevention additive in the electrolyte solution is 0.1-50%, the range of the molar concentration of other functional additives in the electrolyte solution is 0-1 mole/L, and the overcharging prevention additive is salt containing an aromatic group in positive ion or negative ion.

In the large devices, a plurality of lithium ion secondary batteries are usually assembled into battery modules or battery packs to meet the requirement for a high capacity. In such a case, the occurrence of thermal runaway of any one or several lithium ion secondary batteries will bring about a major safety hazard. In order to promote the further development of electric vehicles and energy storage systems, there is a need for the lithium ion secondary batteries to have improved safety performance while having a higher energy density.

Summary of the Invention

The invention is set out in the appended set of claims. In a first aspect, the present application provides a lithium ion secondary battery, comprising a positive electrode plate, a negative electrode plate and an electrolyte, wherein the positive electrode plate comprises a positive electrode active material and a positive electrode lithium-supplementing material comprising a lithium-rich metal oxide which is selected from one or more of the specific compounds defined in claim 1; the electrolyte comprises an electrolyte lithium salt and a solvent, and has a percentage $\varepsilon$ of the total mass of a fluorine element in the anions of the electrolyte lithium salt relative to the total mass of the electrolyte such that $0.5\% \leq \varepsilon < 14\%$, optionally $1.5\% \leq \varepsilon \leq 9.5\%$, wherein the electrolyte lithium salt is selected from one or more of a combination of $LiPF_6$ and an organic lithium salt, a combination of $LiBF_4$ and an organic lithium salt, and an organic lithium salt.

The lithium-rich metal oxide preferably contains one or more of Ni, Co, Fe, Mn, and Cu, which can increase lithium intercalation capacity of their own, such that more active lithium can be released during the charging of the battery, thus more effectively compensating the irreversible loss of lithium and allowing the battery to have a higher high-temperature cycling life or a high-temperature storage life. In addition, the battery in which an active material having a higher coulombic efficiency such as lithium iron phosphate is used as the positive electrode may also have an improved initial discharge capacity.

By adding a positive electrode lithium-supplementing material to the positive electrode plate and at the same time allowing the electrolyte to meet the requirement that the percentage of the total mass of a fluorine element in the anions of the electrolyte lithium salt relative to the total mass of electrolyte to be within an appropriate range, the dissolution of metal ions can be significantly reduced. Therefore, the self-discharge rate of the battery is ensured to be low while improving the volume energy density of the battery, such that the discharge capacity of the battery can be further improved. In particular, the amount of metal deposited on the surface of the negative electrode is significantly reduced, which not only further reduces the side reaction of the electrolyte and reduces the gas production, but also reduces the risk of a short circuit in the battery caused by the penetration of the separator by the deposited metal during the heating process of the battery, thereby effectively improving the high-temperature safety performance of the battery.

In any embodiment of the present application, the percentage of the total mass of a fluorine element in the anions of the electrolyte lithium salt relative to the total mass of the electrolyte is $2\% \leq \varepsilon \leq 9.3\%$, optionally, $\varepsilon$ is 2.5% to 9.2%. The percentage of the total mass of a fluorine element in the anions of the electrolyte lithium salt relative to the total mass of the electrolyte is within the above range, which can further reduce the dissolution of metal ions, and is beneficial to the electrolyte to obtain higher ionic conductivity, such that the battery may have higher high-temperature cycling performance and high-temperature storage performance while having higher high-temperature safety performance.

According to the present invention, the lithium-rich metal oxide is selected from one or more of $Li_xM^1O_{0.5(2+x)}$, $Li_2M^3O_4$, $Li_3M^4O_4$, $Li_5M^5O_4$, and $Li_5M^6O_6$, in which $x \geq 1$, $M^1$ is selected from one or more of Ni, Co, Fe, Mn, Zn, Mg, Ca, Cu, and Sn, $M^3$ is selected from one or more of Ni, Co, Fe, Mn, Sn, Cr, V, and Nb, $M^4$ is selected from one or more of Ni, Co, Fe, Mn, Sn, Cr, V, Mo, and Nb, $M^5$ is selected from one or more of Ni, Co, Fe, Mn, Sn, Cr, and Mo, and $M^6$ is selected from one or more of Ni, Co, and Mn, and the valence state of each element of $M^1$, $M^3$, $M^4$, $M^5$ and $M^6$ is lower than its own highest oxidation valence state, respectively.

In any embodiment of the present application, the lithium-rich metal oxide may comprise one or more of $Li_2MnO_2$, $Li_5FeO_4$, $Li_6CoO_4$, $Li_2NiO_2$, and $Li_2Cu_{x1}Ni_{1-x1-y1}M_{y1}O_2$, and optionally one or more of $Li_3VO_4$ and $Li_3NbO_4$, in which $0 < x1 \leq 1$, $0 \leq y1 < 0.1$, and M is selected from one or more of Zn, Sn, Mg, Fe, and Mn. Optionally $0.2 \leq x1 \leq 0.8$, or $0.4 \leq x1 \leq 0.6$.

The lithium-rich metal oxide described above has a higher delithiation capacity and a suitable initial delithiation voltage, thus having a better effect of supplementing lithium and facilitating to improve the energy density of the battery. Moreover, a suitable lithium-rich metal oxide also facilitates to improve the high-temperature cycling life or high-temperature storage performance of the battery.

In any embodiment of the present application, the lithium-rich metal oxide may contain free lithium including one or more of $LiOH$, $LiHCO_3$, and $Li_2CO_3$, and has a mass percentage $\omega$ of the free lithium in the lithium-rich metal oxide of $\leq 5$ wt%. optionally $\omega \leq 3$ wt%; and further optionally, $0.3$ wt% $\leq \omega \leq 0.7$ wt%. The free lithium in the lithium-rich metal oxide may consume HF, thereby further reducing the dissolution of metal ions. A content of the free lithium within a suitable range can not only reduce the electrochemically inert material in the electrode plate, allowing the battery to have a higher energy density, but also reduce the decomposition and gas production of the free lithium, allowing the battery to have a higher high-temperature cycling performance and high-temperature storage performance.

In any embodiment of the present application, at least part of the outer surface of the lithium-rich metal oxide may have a coating layer. The coating layer comprises one or more of a metal fluoride, an oxide, a metal phosphate, a carbon material, and a conductive polymer.

In any embodiment of the present application, the metal fluoride can be selected from $AlF_3$. The oxide can be selected from one or more of $V_2O_5$, $Al_2O_3$, $ZrO_2$, $TiO_2$, $ZnO$, $SiO_2$, and $B_2O_3$. The metal phosphate can be selected from one or more of $AlPO_4$, $FePO_4$, $Co_3(PO_4)_2$, and $Ni_3(PO_4)_2$. The coating layer can isolate the lithium-rich metal oxide from coming into a contact with the external environment, thereby effectively alleviating the self-capacity loss of the lithium-rich metal oxide due to water absorption or side reactions in the battery, and reducing the dissolution of metal ions. Therefore, the use of a lithium-rich metal oxide modified by a coating layer can further improve the high-temperature safety performance, high-temperature cycling performance and high-temperature storage performance of the battery.

In any embodiment of the present application, the electrolyte lithium salt may comprise one or more selected from lithium difluorooxalate borate (LiDFOB), lithium bisoxalate borate (LiBOB), lithium difluorophosphate (LiDFP), lithium difluorodioxalate phosphate (LiDFOP), lithium tetrafluorooxalate phosphate (LiTFOP), lithium bisfluorosulfonimide (LiFSI), lithium bistrifluoromethanesulfonimide (LiTFSI), lithium tetrafluoroborate ($LiBF_4$), lithium trifluoromethanesulfonate ($LiCF_3SO_3$), lithium bis(trifluoromethylsulfonyl) methide ($LiCH(CF_3SO_2)_2$), lithium tris(trifluoromethylsulfonyl) methide ($LiC(CF_3SO_2)_3$), and optionally comprising lithium hexafluorophosphate ($LiPF_6$). The use of a suitable electrolyte lithium salt facilitates to enable the fluorine content of the electrolyte within a required range, and at the same time, the electrolyte to have high thermal stability and electrochemical stability, thereby further improving the high-temperature safety performance, high-temperature cycling life and high-temperature storage performance of the battery.

In any embodiment of the present application, the electrolyte lithium salt may comprise one or more of lithium bisoxalate borate (LiBOB), lithium difluorodioxalate phosphate (LiDFOP), and lithium bisfluorosulfonimide (LiFSI).

In any embodiment of the present application, the concentration of the electrolyte lithium salt in the electrolyte is 0.7 mol/L-4 mol/L, optionally 0.7 mol/L-3 mol/L. An appropriate content of the lithium salt allows the electrolyte to have a higher ionic conductivity, thereby improving the energy density and cycling performance of the battery.

In any embodiment of the present application, the concentration of $LiPF_6$ in the electrolyte is $\leq 0.4$ mol/L. $LiPF_6$ extreamly tends to be ionized in the electrolyte to form fluorine-containing particles such as $F^-$, $PF_5$ and $PF_6^-$, and these fluorine-containing particles easily cause the dissolution of metal ions in the electrolyte. A small content of $LiPF_6$ in the electrolyte facilitates to reduce the problem described above. In addition, by controlling the concentration of $LiPF_6$ in the electrolyte within the above range, the $\varepsilon$ value of the electrolyte can be further controlled, thereby further reducing the self-discharge rate.

In any embodiment of the present application, the positive electrode active material can be selected from one or more of $Li_zCoO_2$, $Li_zNiO_2$, $Li_zMnO_2$, $Li_zMn_2O_4$, $Li_zNi_aCo_bMn_cM'_dO_2$, $Li_zNi_{1-u}Co_uO_2$, $Li_zCo_{1-u}Mn_uO_2$, $Li_zNi_{1-u}Mn_uO_2$, $Li_zNi_\alpha Co_\beta Mn_\gamma O_4$, $Li_zMn_{2-\eta}Ni_\eta O_4$, $Li_zMn_{2-\eta}Co_\eta O_4$, $Li_zFePO_4$, $Li_zCoPO_4$, $Li_zMnPO_4$, and modified materials thereof, in which M' is selected from one or more of Al, Mo, Nd, and Zn, z independently satisfies $0.5 \leq z \leq 1.3$, $0 < a < 1$, $0 < b < 1$, $0 < c < 1$, $0 \leq d < 1$, $a + b + c + d = 1$, u independently satisfies $0 < u < 1$, $0 < \alpha < 2$, $0 < \beta < 2$, $0 < \gamma < 2$, $\alpha + \beta + \gamma = 2$, and $\eta$ independently satisfies $0 < \eta < 2$.

In any embodiment of the present application, the positive electrode active material may comprise one or more of $Li_zFePO_4$ and modified materials thereof, in which $0.5 \leq z \leq 1.3$. optionally $0.9 \leq z \leq 1.2$, or z = 1. The use of $Li_zFePO_4$ and modified materials thereof facilitates the battery to have a higher high-temperature safety performance.

The positive electrode active material is comprised in the positive electrode active material layer of the positive electrode plate. In some embodiments, the positive electrode active material layer has an areal density of $\geq 18$ mg/cm$^2$, further optionally 18 mg/cm$^2$ - 21 mg/cm$^2$. Designing a larger areal density for the positive electrode active material layer can improve the energy density of the battery.

In any embodiment of the present application, the positive electrode active material may comprise one or more of $Li_zNi_aCo_bMn_cM'_dO_2$ and modified materials thereof, in which $0.5 \leq z \leq 1.3$, $0.5 \leq a < 1$, $0 < b \leq 0.2$, $0 < c \leq 0.3$, $0 \leq d < 1$, and M' is selected from one or more of Al, Mo, Nd, and Zn. The use of the positive electrode active material allows the battery to have a higher energy density.

In any embodiment of the present application, the positive electrode plate comprises a positive electrode current collector and a positive electrode active material layer provided on the positive electrode current collector, and the positive electrode active material layer comprises a positive electrode active material; wherein a positive electrode lithium-supplementing material is uniformly distributed in the positive electrode active material layer and/or a positive electrode lithium-supplementing material is provided between the positive electrode current collector and the positive electrode active material layer in the form of a lithium-supplementing film layer, and/or a positive electrode lithium-supplementing material is provided on the surface of the positive electrode active material layer away from the positive electrode current collector in the form of a lithium-supplementing film layer. In the form of a lithium-supplementing film layer, the safety performance of the battery can be further improved.

In any embodiment of the present application, on at least one side of the positive electrode current collector, the mass ratio of the positive electrode active material to the positive electrode lithium-supplementing material is 99.9 : 0.1 - 85 : 15, optionally 98.5 : 1.5 - 93 : 7, and further optionally 98 : 2 - 95 : 5. In the positive electrode plate, when the ratio of the positive electrode active material to the positive electrode lithium-supplementing material is within a suitable range, sufficient lithium can be provided, thereby facilitating to improve the high-temperature cycling performance and high-temperature storage performance of the battery, and can also improve the overcharge performance of the battery. The positive electrode plate may also have a higher percentage of active material, which is beneficial to allow the battery to have a higher energy density.

In a second aspect, the present application provides a method for preparing a lithium ion secondary battery, comprising the steps of: providing a positive electrode plate, wherein the positive electrode plate comprises a positive electrode active material and a positive electrode lithium-supplementing material comprising a lithium-rich metal oxide as defined above; providing an electrolyte, the electrolyte comprises an electrolyte lithium salt and a solvent, and has a percentage $\varepsilon$ of the total mass of a fluorine element in the anions of the electrolyte lithium salt relative to the total mass of the electrolyte such that $0.5\% \leq \varepsilon < 14\%$, optionally $1.5\% \leq \varepsilon \leq 9.5\%$, wherein the electrolyte lithium salt is selected from one or more of a combination of $LiPF_6$ and an organic lithium salt, a combination of $LiBF_4$ and an organic lithium salt, and an organic lithium salt; and assembling the positive electrode plate, a negative electrode plate and the electrolyte to obtain a lithium ion secondary battery.

In a third aspect, the present application provides a battery module, comprising a lithium ion secondary battery according to the present application.

In a fourth aspect, the present application provides a battery pack, comprising a battery module according to the present application.

In a fifth aspect, the present application provides a device, comprising at least one of a lithium ion secondary battery, a battery module, or a battery pack according to the present application.

The battery module, battery pack and device provided by the present application comprise the lithium ion secondary battery according to the present application, so they can have corresponding beneficial effects.

Brief Description of the Drawings

Fig. 1 is a schematic diagram of an embodiment of a secondary battery of the present application.

Fig. 2 is a exploded schematic diagram of an embodiment of a secondary battery of the present application.

Fig. 3 is a schematic diagram of an embodiment of a battery module of the present application.

Fig. 4 is a schematic diagram of an embodiment of a battery pack of the present application.

Fig. 5 is an exploded view of Fig. 4.

Fig. 6 is a schematic diagram of an embodiment of a device using a secondary battery of the present application as a power supply.

In the present application, the drawings are not drawn to the actual scale.

Detailed Description of Embodiments

In order to achieve the objectives, technical solutions and beneficial technical effects of the present application clearer, the present application will be further described in detail below in conjunction with embodiments. It should be understood that the embodiments described in this specification are only for explaining the application, instead of intending to limit the application.

For the sake of brevity, merely some numerical ranges are explicitly disclosed herein. However, any lower limit may be combined with any upper limit to form a range that is not explicitly described; and any lower limit may be combined with any other lower limit to form an unspecified range, and any upper limit likewise may be combined with any other upper limit to form an unspecified range. Further, although not explicitly specified, each point or single value between endpoints of a range is included in the range. Thus, each point or single value can be taken as a lower or upper limit to be combined with any other point or single value or with any other lower or upper limit to form a range that is not explicitly specified.

In the description herein, it should be noted that, unless otherwise stated, the recitation of numerical ranges by "above" and "below" include all numbers within that range including the endpoints. As used herein, the recitation of "more" in the phrase "one or more" includes two or more.

The above summary of the present application is not intended to describe every disclosed embodiment or every implementation of the present application. The following description will illustrate exemplary embodiments in more detail. Throughout the application, teachings are provided by means of a number of embodiments, which can be used in various combinations. In each instance, a list is only a representative group and should not be interpreted as exhaustive.

Generally, a lithium ion secondary battery comprises a positive electrode plate, a negative electrode plate, a separator and an electrolyte. During the charging/discharging process of the battery, the active ions (lithium ions) move back and forth and intercalated and deintercalated between the positive electrode plate and the negative electrode plate. The separator is provided between the positive electrode plate and the negative electrode plate, and mainly prevents the positive and negative electrodes from short-circuiting and allows the passage of the lithium ions. The electrolyte is provided between the positive electrode plate and the negative electrode plate and mainly functions for ion conduction.

During the initial charging of the battery, lithium ions are deintercalated from the positive electrode active material, conducted by the electrolyte, and intercalated in the negative electrode active material. During this process, part of the lithium ions participate in the reaction of forming a solid electrolyte interface (SEI) film on the surface of the negative electrode active material, resulting in the loss of the active lithium. In addition, the repair and growth of the SEI film and the side reaction of the electrolyte on the surface of the lithium-intercalated negative electrode may occur in the subsequent cyclic charge and discharge process and storage process of the battery, which will irreversibly consume the lithium ions. The consumption of the active lithium will result in a lower cycling performance and/or storage performance of the battery. In addition, the reaction of lithium consumption will also increase the internal gas production of the battery, resulting in poor safety performance. The above effects are more serious at a high temperature (for example, 45°C or higher, such as 45°C - 80°C or 45°C - 60°C, etc.).

In addition, the loss of the active lithium in the SEI film formed in the initial charge will also result in a lower initial discharge capacity, which is not beneficial to the improvement of the energy density of the battery.

Additional active lithium can be provided by the lithium pre-supplementing solution, thereby compensating the loss of the active lithium. The means for pre-supplementing lithium mainly comprises lithium supplement for a negative electrode and lithium supplement for a positive electrode. The lithium supplement for a negative electrode generally involves pre-lithiation of the negative electrode active material by means of using a metal lithium powder or lithium tape. However, the high activity of a lithium metal has high requirements for the environment and equipment, so the process for lithium supplement for a negative electrode is complicated with high costs, which is not beneficial to large-scale application. The solution for lithium supplement for a positive electrode involves adding a lithium-rich compound to the positive electrode as a lithium-supplementing material, thus avoiding the use of a lithium metal. The lithium-rich compound releases lithium during the charging of the battery, which can compensate the irreversible loss of the active lithium in the SEI film formed in the initial charge of the battery and the subsequent cycling and storage process, thereby improving the discharge capacity retention rate of the battery after cycling and/or storage. However, the inventors have found that the battery using lithium supplement for a positive electrode still has the problem of poor high-temperature safety performance.

In order to allowing the battery to have both a higher energy density and high-temperature safety performance, the inventors have further carried out a lot of studies and found that the above-mentioned invention purpose can be achieved by adding a suitable positive electrode lithium-supplementing material to the positive electrode plate, and allowing the percentage $\varepsilon$ of the total mass of a fluorine element in the anions of the electrolyte lithium salt in the electrolyte relative to the total mass of the electrolyte to be less than 14%. The percentage $\varepsilon$ of the total mass of a fluorine element in the anions of the electrolyte lithium salt relative to the total mass of the electrolyte can be determined by ion chromatography.

Therefore, in a first aspect, the present application provides a lithium ion secondary battery. In the lithium ion secondary battery, the positive electrode plate comprises a positive electrode active material and a positive electrode lithium-supplementing material comprising a lithium-rich metal oxide, and the lithium-rich metal oxide comprises one or more elements of Ni, Co, Fe, Mn, and Cu; and the electrolyte comprises an electrolyte lithium salt and a solvent, and has a percentage $\varepsilon$ of the total mass of a fluorine element in the anions of the electrolyte lithium salt relative to the total mass of the electrolyte of < 14%.

The inventors have found that the lithium-rich metal oxide contains one or more of Ni, Co, Fe, Mn, and Cu, which can increase its own lithium intercalation capacity. Accordingly, the lithium-rich metal oxide has a higher delithiation capacity, and can release more active lithium during the charging of the battery, thus more effectively compensating the irreversible loss of lithium and allowing the battery to have a higher cycling life or storage life at a higher temperature. In addition, the battery with a higher positive electrode initial efficiency, such as a lithium iron phosphate/graphite battery, may also has an improved initial discharge capacity.

The explanation of the effects of the present application is not intended to be bound by any theory. The crystal lattice of the lithium-rich metal oxide will change drastically in the process of delithiation, and in such a case, allowing the electrolyte to meet the percentage of the total mass of a fluorine element in the anions of the electrolyte lithium salt relative to the total mass of electrolyte within an appropriate range can effectively alleviate the problem of dissolution of metal ions. A significantly reduced amount of dissolution of the metal ions can reduce the amount of the metal deposited on the surface of the negative electrode, which not only further reduces the side reaction of the electrolyte and reduces the gas production, but also reduces the risk of a short circuit in the battery caused by the penetration of the separator by the deposited metal during the heating process of the battery, thereby further improving the high-temperature safety performance of the battery.

In addition, since the metal ions dissolved from the lithium-rich metal oxide are greatly reduced, the shuttle effect of the metal ions or the self-discharge of the battery caused by deposition on the surface of the negative electrode can be significantly reduced, such that the utilization of the capacity of the battery can be improved, and the discharge capacity of the battery can be further improved. Moreover, the reduction reaction of metal ions on the surface of the negative electrode is reduced, such that the damage to the SEI film is reduced, thereby reducing the consumption of the electrolyte and the active lithium caused by the continuous repair of the SEI film, and thus allowing the battery to have a higher discharge capacity retention rate during the cycling or storage at a high temperature. Therefore, the high-temperature cycling performance or high-temperature storage performance of the battery is further improved.

In some embodiments, in the electrolyte, the percentage $\varepsilon$ of the total mass of fluorine element in the anions of the electrolyte lithium salt relative to the total mass of the electrolyte is $\leq 13.8\%$, $\leq 13.5\%$, $\leq 13\%$, $\leq 12.5\%$, $\leq 12\%$, $\leq 11.5\%$, $\leq 11\%$, $\leq 10.5\%$, $\leq 10\%$, $\leq 9.5\%$, $\leq 9.3\%$, $\leq 9\%$, $\leq 8.5\%$, $\leq 8\%$, $\leq 7.5\%$, $\leq 7\%$, $\leq 6.5\%$, $\leq 6\%$, $\leq 5.5\%$, $\leq 5\%$, $\leq 4.5\%$, $\leq 4\%$, $\leq 3.5\%$, $\leq 3\%$, or $\leq 2.5\%$. When the $\varepsilon$ value of the electrolyte is within a suitable range, the dissolution of metal ions can be further reduced, which is more beneficial to improving the high-temperature safety performance of the battery. In addition, the high-temperature storage performance or high-temperature cycling performance of the battery can be further improved.

In some embodiments, the $\varepsilon$ of the electrolyte is $\geq 0.5\%$, $\geq 0.8\%$, $\geq 1\%$, $\geq 1.1\%$, $\geq 1.2\%$, $\geq 1.3\%$, $\geq 1.4\%$, $\geq 1.5\%$, $\geq 1.6\%$, $\geq 1.8\%$, $\geq 2\%$, $\geq 2.3\%$, or $\geq 2.5\%$. The electrolyte contains an appropriate amount of fluorine, which is beneficial for the electrolyte to have a higher ionic conductivity, thereby improving the initial discharge capacity, high-temperature cycling performance and high-temperature storage performance of the battery. In addition, the battery may also have a higher power performance.

In some embodiments, the $\varepsilon$ of the electrolyte is 0-10%, 0-9.3%, 1%-9.5%, 1.5%-9.5%, 2%-9.3%, 2.5%-9.2%, 0.5%-8.5%, 1%-8%, 1%-7.5%, 1.2%-7%, 1.3%-6.5%, 1.5%-5%, or 2%-5% etc.

[Positive electrode plate]

The positive electrode plate generally comprises a positive electrode current collector and a positive electrode active material layer provided on at least one surface of the positive electrode current collector. As an example, the positive electrode current collector has two opposite surfaces in the thickness direction thereof, and the positive electrode active material layer is provided on either or both surfaces of the positive electrode current collector.

The positive electrode current collector may be a metal foil or a composite current collector (the composite current collector can be formed by providing a metal material on a polymer material layer). As an example, an aluminum foil can be used as the positive electrode current collector.

The positive electrode active material layer comprises a positive electrode active material. The positive electrode active material may be a material known in the art for the positive electrode of a lithium ion secondary battery and capable of reversibly intercalating and deintercalating lithium ions. In some embodiments, the positive electrode active material can be selected from one or more of $Li_zCoO_2$, $Li_zNiO_2$, $Li_zMnO_2$, $Li_zMn_2O_4$, $Li_zNi_aCo_bMn_cM'_dO_2$, $Li_zNi_{1-u}Co_uO_2$, $Li_zCo_{1-u}Mn_uO_2$, $Li_zNi_{1-u}Mn_uO_2$, $Li_zNi_aCo_\beta Mn_\gamma O_4$, $Li_zMn_{2-\eta}Ni_\eta O_4$, $Li_zMn_{2-\eta}Co_\eta O_4$, $Li_zFePO_4$, $Li_zCoPO_4$, $Li_zMnPO_4$, and modified materials thereof, in which M' is selected from one or more of Al, Mo, Nd, and Zn, z independently satisfies $0.5 \leq z \leq 1.3$, $0 < a < 1$, $0 < b < 1$, $0 < c < 1$, $0 \leq d < 1$, $a + b + c + d = 1$, u independently satisfies $0 < u < 1$, $0 < \alpha < 2$, $0 < \beta < 2$, $0 < \gamma < 2$, $\alpha + \beta + \gamma = 2$, and $\eta$ independently satisfies $0 < \eta < 2$.

Herein, the modification involved in the modified material may be one or more of doping modification and coating modification.

In some embodiments, the positive electrode active material may comprise one or more of $Li_zFePO_4$ and modified materials thereof, in which $0.5 \leq z \leq 1.3$. optionally $0.8 \leq z \leq 1.3$, $0.9 \leq z \leq 1.2$, or $0.95 \leq z \leq 1.1$. In some embodiments, $z = 1$. $Li_zFePO_4$ and modified materials thereof have high thermal stability, which is beneficial for the battery to have higher high-temperature safety performance. In addition, the battery may also have a longer high-temperature cycling life and higher high-temperature storage performance.

In some embodiments, the modified material of $Li_zFePO_4$ may be one in which Fe is partially replaced by a metal element other than Fe, such as Sc, V, Cr, Mn, Ti, Al, Co, Ni, Cu, Zn, etc., and having an atomic radius close to that of Fe. An example of the modified material of $Li_zFePO_4$ includes $Li_zFe_{1-k}Me_kPO_4$, in which Me is selected from one or more of Sc, V, Cr, Mn, Ti, Al, Co, Ni, Cu, and Zn, $0 < k \leq 0.5$, optionally $0.01 \leq k \leq 0.2$. optionally Me is selected from one or more of Mn, Ti, Al, Ni, Cu, and Zn.

The inventors have further found that when the positive electrode active material comprises one or more of $Li_zFePO_4$ and modified materials thereof, if the positive electrode plate simultaneously satisfies one or more of the following conditions, the performance of the battery can be further improved.

In some embodiments, the positive electrode active material layer has an areal density of $\geq 18$ mg/cm$^2$. Optionally, the positive electrode active material layer has an areal density of 18 mg/cm$^2$ - 26 mg/cm$^2$, and further optionally 18 mg/cm$^2$ - 25 mg/cm$^2$, 18 mg/cm$^2$ - 23 mg/cm$^2$, 18 mg/cm$^2$ - 21 mg/cm$^2$, 19 mg/cm$^2$ - 22 mg/cm$^2$, or 20 mg/cm$^2$ - 25 mg/cm$^2$. In the lithium ion secondary battery of the present application, a larger areal density of the positive electrode active material layer can be designed, thereby further improving the energy density of the battery.

In these embodiments, the positive electrode active material layer may have a compacted density of 2.0 g/cm$^3$ - 2.6 g/cm$^3$, for example 2.2 g/cm$^3$ - 2.4 g/cm$^3$. When the compacted density of the positive electrode active material layer is within an appropriate range, the positive electrode plate is ensured to have good electron transport performance and a porosity suitable for the infiltration of the electrolyte, which is beneficial for the battery to have a higher cycling performance.

In some embodiments, the positive electrode active material may comprise one or more of $Li_zNi_aCo_bMn_cM'_dO_2$ and modified materials thereof, in which $0.5 \leq z \leq 1.3$, $0.5 \leq a < 1$, $0 < b \leq 0.2$, $0 < c \leq 0.3$, $0 \leq d < 1$, and M' is selected from one or more of Al, Mo, Nd, and Zn. Optionally $0.8 \leq z \leq 1.2$. Optionally $0.5 \leq a \leq 0.9$, $0.6 \leq a \leq 0.85$, or $0.65 \leq a \leq 0.8$. As an example, the positive electrode active material can be selected from $LiNi_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$, and modified materials of these materials, etc. The use of the positive electrode active material described above allows the battery to have a higher energy density.

In some embodiments, the lithium-rich metal oxide can be selected from one or more of $Li_xM^1O_{0.5(2+x)}$, $Li_2M^2O_3$, $Li_2M^3O_4$, $Li_3M^4O_4$, $Li_5M^5O_4$, and $Li_5M^6O_6$, in which $x \geq 1$, $M^1$ is selected from one or more of Ni, Co, Fe, Mn, Zn, Mg, Ca, Cu, and Sn, $M^2$ is selected from one or more of Ni, Co, Fe, Mn, Sn, and Cr, $M^3$ is selected from one or more of Ni, Co, Fe, Mn, Sn, Cr, V, and Nb, $M^4$ is selected from one or more of Ni, Co, Fe, Mn, Sn, Cr, V, Mo, and Nb, $M^5$ is selected from one or more of Ni, Co, Fe, Mn, Sn, Cr, and Mo, and $M^6$ is selected from one or more of Ni, Co, and Mn, and the valence state of each element of $M^1$, $M^2$, $M^3$, $M^4$, $M^5$ and $M^6$ is lower than its own highest oxidation valence state, respectively.

In some embodiments, the lithium-rich metal oxide may comprise one or more of $Li_2MnO_2$, $Li_5FeO_4$, $Li_6CoO_4$, $Li_2NiO_2$, and $Li_2Cu_{x1}Ni_{1-x1-y1}M_{y1}O_2$, and optionally one or more of $Li_3VO_4$ and $Li_3NbO_4$. Optionally, the lithium-rich metal oxide may comprise one or more of $Li_2MnO_2$, $Li_5FeO_4$, $Li_6CoO_4$, $Li_2NiO_2$, and $Li_2Cu_{x1}Ni_{1-x1-y1}M_{y1}O_2$. Further optionally, the lithium-rich metal oxide may comprise one or more of $Li_5FeO_4$, $Li_6CoO_4$, and $Li_2Cu_{x1}Ni_{1-x1-y1}M_{y1}O_2$. In $Li_2Cu_{x1}Ni_{1-x1-y1}M_{y1}O_2$, $0 < x1 \leq 1$, $0 \leq y1 < 0.1$, and M is selected from one or more of Zn, Sn, Mg, Fe, and Mn. Optionally, $0.2 \leq x1 \leq 0.8$, $0.2 \leq x1 \leq 0.6$, $0.3 \leq x1 \leq 0.7$, $0.3 \leq x1 \leq 0.6$, or $0.4 \leq x1 \leq 0.6$.

The lithium-rich metal oxide described above has a higher delithiation capacity and a suitable initial delithiation voltage, which can match the charging potential of the positive electrode active material, and enable the better utilization the effect of lithium supplementing, thereby further improving the energy density of the battery. Moreover, a suitable lithium-rich metal oxide is also beneficial to improve the high-temperature cycling life or high-temperature storage performance.

In some embodiments, the lithium-rich metal oxide may comprise or be $Li_2Cu_{x1}Ni_{1-x1-y1}M_{y1}O_2$. In the formula, the number ratio of Ni/Cu atoms is 0.1-4. Optionally, the number ratio of Ni/Cu atoms is 1 : 4-4 : 1, 1 : 2-4 : 1, 2 : 3-4 : 1, 3 : 7-7 : 3, 4 : 6-7 : 3, or 4 : 6-6 : 4. The use of the lithium-rich metal oxide can further improve the energy density of the battery, and improve the high-temperature cycling performance, high-temperature storage performance and high-temperature safety performance of the battery. The inventors have also found that the use of the positive electrode lithium-supplementing material can further improve the overcharge window of the battery, allowing the battery to have a higher overcharge performance.

In some embodiments, the lithium-rich metal oxide has an initial delithiation capacity of $\geq 250$ mAh/g. Optionally, the lithium-rich metal oxide has an initial delithiation capacity of $\geq 300$ mAh/g, $\geq 350$ mAh/g, $\geq 400$ mAh/g, or $\geq 450$ mAh/g. The lithium-rich metal oxide has a higher initial delithiation capacity, and can release more active lithium in the battery, thereby facilitating to improve the energy density of the battery. Further, the battery may also have a longer cycling life and storage life.

In some embodiments, the lithium-rich metal oxide has an initial delithiation platform voltage of 2.0 V-4.5 V (relative to Li/Li$^+$). Optionally, the lithium-rich metal oxide has an initial delithiation platform voltage of 2.5 V-4.2 V, 3 V-4.2 V, 2.8 V-4 V, 3.0 V-3.75 V, 3.2 V-3.6 V, or 3.4 V-4.1 V, etc (relative to Li/Li$^+$). The lithium-rich metal oxide has a lower delithiation platform voltage, which can match the delithiation potential of the positive electrode active material, such that the utilization of the capacity of the lithium-supplementing material and the active material can be better exerted, and the lithium-supplementing effect can be improved.

In some embodiments, the lithium-rich metal oxide may contain free lithium including one or more of LiOH,

$LiHCO_3$, and $Li_2CO_3$. The free lithium in the lithium-rich metal oxide may consume HF, thereby further reducing the dissolution of metal ions.

In some embodiments, the mass percentage $\omega$ of the free lithium in the lithium-rich metal oxide is $\leq 5$ wt%, optionally $\omega \leq 3$ wt%, and further optionally 0.1 wt% $\leq \omega \leq 3$ wt%, 0.1 wt% $\leq \omega \leq 2$ wt%, 0.2 wt% $\leq \omega \leq 1$ wt%, or 0.3 wt% $\leq \omega \leq 0.7$ wt%. When the content of the free lithium in the lithium-rich metal oxide is within a suitable range, the decomposition and gas production of the free lithium can be reduced, allowing the electrode plate to have a good reaction interface kept, thereby allowing the battery to have a higher high-temperature cycling performance and high-temperature storage performance. In addition, the free lithium is an electrochemically inert material, and reducing the content of the free lithium in the positive electrode is beneficial for the battery to have a higher energy density.

In some embodiments, at least part of the outer surface of the lithium-rich metal oxide has a coating layer. The coating layer may comprise one or more of a metal fluoride, an oxide, a metal phosphate, a carbon material, and a conductive polymer. The oxide is selected from oxides or lithium composite oxides of elements other than C in Groups IB to VIIB, Group VIII, Group IIIA and Group IV of the periodic table of elements. Optionally, the coating layer may comprise one or more of a metal fluoride, an oxide, and a metal phosphate.

The lithium-rich metal oxide is generally alkaline, especially when the oxide is highly alkaline (for example, pH is about 12), it easily absorbs moisture in the environment. The introduction of moisture into the battery by the lithium-rich metal oxide will cause problems of a series of side reactions, which will affect the utilization of the capacity of the battery and further improvement of the cycling life. The coating layer can function for isolation and reduce the contact between the lithium-rich metal oxide and the external environment, thereby reducing the amount of water absorption, thus effectively alleviating the capacity loss caused by water absorption and allowing the battery to have a higher energy density and cycling capacity retention rate. In addition, the coating layer can also isolate the lithium-rich metal oxide from coming into a direct contact with the electrolyte, which is beneficial to further reduce the dissolution of metal ions, thereby further improving the high-temperature safety performance, high-temperature cycling performance and high-temperature storage performance of the battery.

In some embodiments, the metal fluoride can be selected from $AlF_3$.

In some embodiments, the oxide can be selected from one or more of $V_2O_5$, $Al_2O_3$, $ZrO_2$, $TiO_2$, $ZnO$, $SiO_2$, $Co_3O_4$, $B_2O_3$, $Li_2MnO_3$, $LiAlO_2$, $Li_2TiO_3$, and $Li_2ZrO_3$. Optionally, the oxide can be selected from one or more of $V_2O_5$, $Al_2O_3$, $ZrO_2$, $TiO_2$, $ZnO$, $SiO_2$, and $B_2O_3$. A suitable oxide can improve the stability of the coating layer, and is beneficial to better isolate the lithium-rich metal oxide from into a contact with the external environment or the electrolyte, thereby further reducing the water absorption and the dissolution of metal ions.

In some embodiments, the phosphate can be selected from one or more of $Li_3PO_4$, $AlPO_4$, $FePO_4$, $Co_3(PO_4)_2$, and $Ni_3(PO_4)_2$. Optionally, the phosphate can be selected from one or more of $AlPO_4$, $FePO_4$, $Co_3(PO_4)_2$, and $Ni_3(PO_4)_2$. A suitable phosphate can improve the stability of the coating layer, and facilitates to better isolate the lithium-rich metal oxide from coming into a contact with the external environment or the electrolyte, thereby further reducing the water absorption and the dissolution of metal ions.

In some embodiments, the carbon material can be selected from one or more of graphene, carbon nanotubes, and carbon fibers.

In some embodiments, the conductive polymer can be selected from one or more of polythiophenes, polypyrroles, polyanilines, polypyridines, and modified polymers of the these materials. As an example, the modified polymer may be a polyethylene glycol modified polymer. An example of polythiophenes can be selected from polythiophene, poly (3,4-ethylenedioxythiophene), etc.

In some embodiments, the coating layer comprise one or more of a metal fluoride, an oxide and a phosphate, and a conductive polymer. As an example, the coating layer comprise $Al_2O_3$ and polyethylene glycol modified poly 3,4-ethylenedioxythiophene. As another example, the coating layer comprise $Li_3PO_4$ and polypyrrole.

In any embodiment, the coating layer may be a single layer or a multi-layer composite coating layer.

In the positive electrode plate, the positive electrode lithium-supplementing material can be loaded on the positive electrode current collector in any form that can release lithium into the electrolyte. In some embodiments, the positive electrode lithium-supplementing material may be uniformly distributed in the positive electrode active material layer. That is, the positive electrode active material layer comprises a positive electrode active material and a positive electrode lithium-supplementing material.

In some embodiments, the positive electrode lithium-supplementing material is uniformly distributed in the positive electrode active material layer, and based on the total weight of the positive electrode active material layer, the content W of the positive electrode lithium-supplementing material is 0.1%-10%, optionally W $\geq 0.5\%$, $\geq 1\%$, $\geq 1.5\%$, $\geq 2\%$, $\geq 3\%$, or $\geq 4\%$. When the content of the positive electrode lithium-supplementing material in the positive electrode plate is within a suitable range, sufficient lithium can be provided to compensate the active lithium consumed by the SEI film or side reaction, thereby improving the capacity retention rate of the battery during high-temperature cycling or high-temperature storage. The inventor have also found that when the positive electrode plate contains an appropriate amount of positive electrode lithium-supplementing material, the overcharge window of the battery can be further improved, such that the battery is allowed to have higher overcharge performance. Optionally, W $\leq$ 10%, $\leq$ 8%, $\leq$ 7%, or $\leq$ 6%. Allowing the content of the positive electrode lithium-supplementing material in the positive electrode plate within the above range can also ensure that the positive electrode has a higher percentage of the active material, which is beneficial for the battery to have a higher energy density.

In some embodiments is 1%-10%, 1%-8%, 1%-6%, 2% ~ 6%, 3%-6%, 1%-5%, 1.5%-3%, 2%-5%, 2%-4%, 4%-10%, 6%-10%, or 8%-10%.

In some embodiments, the positive electrode lithium-supplementing material is provided on the positive electrode current collector in the form of a lithium-supplementing film layer. The lithium-supplementing film layer is a film layer comprising a positive electrode lithium-supplementing material. In some embodiments, the lithium-supplementing film layer and the positive electrode active material layer may stacked on the surface of the positive electrode current collector.

As an example, the lithium-supplementing film layer is provided between the positive electrode current collector and the positive electrode active material layer. When an abnormal condition such as piercing occurs in the battery, the lithium-supplementing film layer provided between the positive electrode current collector and the positive electrode active material layer can reduce the risk of contact between the burr of the positive electrode current collector and the negative electrode, and is beneficial to improve the short-circuit resistance, thereby improving the safety performance of the battery.

As another example, the lithium-supplementing film layer is provided on the surface of the positive electrode active material layer away from the positive electrode current collector. The inventors have found that when the short circuit in the battery is caused by melting or penetration of the separator, the lithium-supplementing film layer provided on the surface of the positive electrode active material layer away from the positive electrode current collector can improve the short-circuit resistance and reduce the reaction severity during a short circuit, thereby further improving the high-temperature safety performance of the battery. In addition, the lithium-supplementing film layer is located on the outer surface of the positive electrode active material layer, which also facilitates to improve the overcharge performance of the battery.

In the positive electrode plate, the lithium-supplementing film layer and the positive electrode active material layer may or may not be in contact with each other.

In some embodiments, on at least one side of the positive electrode current collector, the mass ratio of the positive electrode active material to the positive electrode lithium-supplementing material is 99.9 : 0.1-85 : 15, optionally 99.5 : 0.5-90 : 10, 99.5 : 0.5-92 : 8, 99 : 1-89 : 11, 99 : 1-93 : 7, 98.5 : 1.5-93 : 7, 98.5 : 1.5-94 : 6, 98 : 2-94 : 6, 98 : 2-95 : 5, or 98 : 2-96 : 4. When the content of the positive electrode lithium-supplementing material in the positive electrode plate is within a suitable range, sufficient lithium can be provided, thereby facilitating to improve the high-temperature cycling performance and high-temperature storage performance of the battery, and can also improve the overcharge performance of the battery. In addition, the positive electrode plate may also have a higher percentage of active material, thereby facilitating to allow the battery to have a higher energy density.

In the positive electrode plate of the present application, the positive electrode active material layer and/or the lithium-supplementing film layer may also optionally comprise a binder. An example of the binder may include one or more of polyvinylidene fluoride (PVDF) and polytetrafluoroethylene (PTFE).

In the positive electrode plate of the present application, the positive electrode active material layer and/or the lithium-supplementing film layer may also optionally comprise a conductive agent. An example of the conductive agent may include one of more of superconducting carbon, carbon black (for example, acetylene black, Ketjen black), carbon dots, carbon nanotubes, graphene, and carbon nanofibers.

It should be noted that the positive electrode active material layer and the optional lithium-supplementing film layer may be provided on either or both surfaces of the positive electrode current collector. If the parameters of the film layer or material on either side of the positive electrode current collector satisfy the present application, they are considered to fall within the scope of protection of the present application. In addition, the range of the compacted density, areal density, etc., of the positive electrode active material layer described in the present application all refer to the parameters of the positive electrode active material layer in the positive electrode plate that can be used for assembling battery by compacting by cold pressing.

In the present application, the chemical composition of the lithium-rich metal oxide and the number ratio of Ni/Cu atoms can be determined by using the method known in the art. For example, inductively coupled plasma emission spectrometry. An exemplary test method for the number ratio of Ni/Cu atoms in the lithium-rich metal oxides is as follows: at 25°C, 0.5 g of lithium-rich metal oxide is taken and digested in 100 mL of 0.1 mol/L of HCl solution for 30 min. The digestion can be carried out under stirring (for example, magnetic stirring, mechanical stirring or microwave stirring, etc.). The digested solution is placed into an inductively coupled plasma emission spectrometer (for example, Thermo Fisher scientific ICAP7400 from United States), and the contents of Cu and Ni elements are measured. The test conditions are: a cleaning pump of 40-60 rpm (revolutions per minute), a radio frequency power of 950W-1150W, a pressure of the atomizer of 24-32 Psi (pounds per square inch), and a flow rate of the auxiliary device being set to 0.5 L/min. The number ratio of Ni/Cu atoms is calculated according to the contents of Cu and Ni elements. The chemical composition of the lithium-rich metal oxide can be determined with reference to the method described above.

In the present application, the mass percentage of the free lithium in the lithium-rich metal oxide can be determined by using the method known in the art, for example titration. The test can made by referring to the following standard: GB/T 9725-2007 General Principles for Potentiometric Titration of Chemical Reagents. An exemplary test method is as follows: a 905 Titrando potentiometric titrator equipped with a composite pH electrode is used; 30 g of lithium-rich metal oxide is charged into an iodine volumetric flask, 100 mL of deionized water is added, followed by dispersing at 25°C for 30 min at a speed of 360 r/min, leaving to stand for 10 min, and vacuum filtering with a 0.45 $\mu$m microporous membrane to obtain a dispersion; then the dispersion is titrated with 0.05 mol/L of HCl solution; and the content of the free lithium and the mass percentage of the free lithium in the lithium-rich metal oxide are calculated according to the titration amount.

In the present application, the areal density of the positive electrode active material layer has a meaning well-known in the art, and can be determined by the method known in the art. For example, a positive electrode plate that is coated on one side and cold pressed (if it is coated on both sides, the positive electrode active material layer on one side can be wiped away first) is taken and punched into a small wafer with an area of S1, which is weighed and the weight is recorded as M1. Then the positive electrode active material layer of the above positive electrode plate after weighing is wiped away, the positive electrode current collector is weighed and the weight is recorded as M0; the areal density of the positive electrode active material layer = (the weight of the positive electrode plate M1 - the weight of the positive electrode current collector M0)/S1.

In the present application, the compacted density of the positive electrode active material layer has a meaning well-known in the art, and can be determined by the method known in the art. The compacted density of the positive electrode active material layer = the areal density of the positive electrode active material layer / the thickness of the positive electrode active material layer. The thickness of the positive electrode active material layer can be determined by the method known in the art, for example a ten-thousandth micrometer (e.g., Mitutoyo293-100 type, with an accuracy of 0.1 $\mu$m).

[Electrolyte]

The electrolyte comprises an electrolyte lithium salt and a solvent, and has a percentage $\varepsilon$ of the total mass of a fluorine element in the anions of the electrolyte lithium salt relative to the total mass of the electrolyte is < 14%. In some embodiments, $\varepsilon$ is $\leq$ 13.8%, $\leq$ 13.5%, $\leq$ 13%, $\leq$ 12.5%, $\leq$ 12%, $\leq$ 11.5%, $\leq$ 11%, $\leq$ 10.5%, $\leq$ 10%, $\leq$ 9.5%, $\leq$ 9.3%, $\leq$ 9%, $\leq$ 8.5%, $\leq$ 8%, $\leq$ 7.5%, $\leq$ 7%, $\leq$ 6.5%, $\leq$ 6%, $\leq$ 5.5%, $\leq$ 5%, $\leq$ 4.5%, $\leq$ 4%, $\leq$ 3.5%, $\leq$ 3%, or $\leq$ 2.5%. In some embodiments, $\varepsilon$ is $\geq$ 0%, $\geq$ 0.5%, $\geq$ 0.8%, $\geq$ 1%, $\geq$ 1.1%, $\geq$ 1.2%, $\geq$ 1.3%, $\geq$ 1.4%, $\geq$ 1.5%, $\geq$ 1.6%, $\geq$ 1.8%, $\geq$ 2%, $\geq$ 2.3%, or $\geq$ 2.5%. Optionally, $\varepsilon$ is 0-10%, 0-9.3%, 1%-9.5%, 1.5%-9.5%, 2%-9.3%, 2.5%-9.2%, 0.5%-8.5%, 1%-8%, 1%-7.5%, 1.2%-7%, 1.3%-6.5%, 1.5%-5%, or 2%-5%, etc.

The percentage $\varepsilon$ of the total mass of a fluorine element in the anions of the electrolyte lithium salt relative to the total mass of the electrolyte can be determined by ion chromatography. An exemplary test method is as follows: an ion chromatograph (e.g. ICS-900) is used; wherein the chromatographic column is an anion separation column (e.g., Shodex IC SI-90 4E, 4.6 $\times$ 250 mm); the suppressor is an anion suppressor (e.g., ACRS 500, 4 mm); the detector is a conductivity detector; and the eluent is an aqueous solution containing 1.8 mmol/L $Na_2CO_3$ + 1.8 mmol/L $NaHCO_3$ + 20% acetonitrile (v/v), and the flow rate is 1.0 mL/min. The determination can carried out by referring to JY/T 020-1996 "General Principles of Ion Chromatography Analysis Methods". Measure the types of anions of all electrolyte lithium salts and the respective contents thereof in the electrolyte, then multiply the content of each anion by the mass percentage of a fluorine element in the anion, and sum up same to calculate the total mass of a fluorine element in the anions of the electrolyte lithium salts in the electrolyte, and then calculate $\varepsilon$.

It should be noted that, for the test of the electrolyte, a sample of the electrolyte can be taken directly (before being injected into the battery) for testing, or it can be sampled and tested from the secondary battery with cyclic charge/-discharge cycles within 200 cycles.

According to the present invention, the electrolyte lithium salt is selected from one or more of a combination of $LiPF_6$ and an organic lithium salt, a combination of $LiBF_4$ and an organic lithium salt, and an organic lithium salt. Optionally, the electrolyte lithium salt can be selected from an organic lithium salt.

The organic anion of the organic lithium salt can comprise fluorine or be free of fluorine. In some embodiments, the organic lithium salt can be selected from one or more of lithium difluorooxalate borate (LiDFOB), lithium bisoxalate borate (LiBOB), lithium difluorophosphate (LiDFP), lithium difluorodioxalate phosphate (LiDFOP), lithium tetrafluorooxalate phosphate (LiTFOP), lithium bisfluorosulfonimide (LiFSI), lithium bistrifluoromethanesulfonimide (LiTFSI), lithium trifluoromethanesulfonate ($LiCF_3SO_3$), lithium bis(trifluoromethylsulfonyl) methide ($LiCH(CF_3SO_2)_2$), and lithium tris(tri-fluoromethylsulfonyl) methide ($LiC(CF_3SO_2)_3$). Optionally, the organic lithium salt may comprise one or more of LiDFOB, LiBOB, LiTFOP, LiTFSI, LiDFOP, and LiFSI. Further optionally, the organic lithium salt may comprise one or more of LiDFOB, LiBOB, LiTFOP, LiDFOP, and LiFSI. Still further optionally, the organic lithium salt may comprise one or more of LiBOB, LiDFOP, and LiFSI.

The use of a suitable electrolyte lithium salt is beneficial to allow the fluorine content of the electrolyte within a required range and allow the electrolyte to have a higher ionic conductivity, which can improve the utilization of the capacity of the battery and the capacity retention rate during the cycling, thereby further improving the initial discharge capacity and cycling life. A suitable electrolyte lithium salt may also have higher thermal stability and electrochemical stability, which can further improve the high-temperature cycling life and high-temperature storage performance of the battery, and improve the high-temperature safety performance of the battery. The thermal diffusion performance or hot box performance of the battery is significantly improved.

In some embodiments, the concentration of the electrolyte lithium salt in the electrolyte is 0.7 mol/L-4 mol/L. Optionally, the concentration of the electrolyte lithium salt in the electrolyte is 0.7 mol/L-3 mol/L, 0.9 mol/L-2 mol/L, 1 mol/L-1.5 mol/L, 1 mol/L-4 mol/L, or 2 mol/L-4 mol/L. An appropriate content of the electrolyte lithium salt allows the electrolyte to have a higher ionic conductivity, further improving the utilization of the capacity of the positive electrode lithium-supplementing material and improving the energy density of the battery.

In some embodiments, the electrolyte comprises $LiPF_6$, and the concentration of $LiPF_6$ in the electrolyte is $\leq 0.4$ mol/L. Optionally, the concentration of $LiPF_6$ in the electrolyte is $\leq 0.3$ mol/L, $\leq 0.2$ mol/L, or $\leq 0.1$ mol/L. In some embodiments, the concentration of $LiPF_6$ in the electrolyte is 0-0.4 mol/L, 0.05 mol/L-0.3 mol/L, or 0.1 mol/L-0.2 mol/L, etc. $LiPF_6$ is easily ionized in the electrolyte to form fluorine-containing particles such as $F^-$, $PF_5$ and $PF_6^-$, and these fluorine-containing particles easily cause the dissolution of metal ions in the electrolyte. The content of $LiPF_6$ in the electrolyte is small, which is beneficial to reduce the problem described above. In addition, by controlling the concentration of $LiPF_6$ in the electrolyte within the above range, the $\varepsilon$ value of the electrolyte can be further controlled, thereby further reducing the self-discharge rate.

In some embodiments, the solvent of the electrolyte may comprise one or more of ethylene carbonate (EC), propylene carbonate (PC), diethyl carbonate (DEC), dimethyl carbonate (DMC), methyl ethyl carbonate (EMC), methyl formate, methyl acetate, ethyl acetate, propyl acetate, methyl propionate, ethyl propionate, propyl propionate and methyl butyrate.

In some embodiments, the solvent comprises one or more of EC and PC, and one or more of DEC, DMC, and EMC. As an example, the solvent comprises EC, EMC and optional PC. Optionally, in the solvent, the volume percentage of EC is 20%-40%, the volume percentage of PC is 0%-20%, and the volume percentage of EMC is 60%-80%. For example, the volume ratio of EC, PC to EMC is 1 : 1:3, or 3 : 0:7, etc.

In some embodiments, the solvent of the electrolyte further optionally comprises one or more of γ-butyrolactone (GBL) and dimethyl methylphosphonate (DMMP). This is beneficial to reduce the density of the electrolyte, such that the weight of the battery is reduced and the energy density is improved.

In some embodiments, the solvent further comprises an optional additive. The additive can be selected from additives known in the art for electrolyte of secondary battery. As an example, the additive may include one or more of a first additive, a second additive and a third additive.

An example of the first additive may include one or more of heptamethyldisilazane (HEMDS), ethanolamine (MEA), 1,3-propane sultone (1,3-PS), and succinonitrile (SN). The use of the first additive may consume the by-product of HF in the electrolyte, thereby further inhibiting the dissolution of metal ions and facilitating to improve the high-temperature safety performance of the battery.

An example of the second additive may include one or more of tris(trimethylsilane)phosphate (TMSP), and tris(trimethylsilane)borate (TMSB). The second additive can be oxidized on the positive electrode to form a protective film, which can reduce the dissolution of metal ions and protect the positive electrode active material, thereby further improving the high-temperature safety performance of the battery, and also improving the high-temperature cycling life or high-temperature storage performance.

An example of the third additive may include one or more of lithium polytartarate borate (PLTB), lithium polybis(trimethylolpropane) borate (PLDB), and lithium polypentaerythrityl borate (PLPB). The third additive has higher thermal stability, which facilitates to improve the high-temperature safety performance of the battery.

[Negative electrode plate]

The negative electrode plate used in conjunction with the positive electrode plate of the present application can be selected from various conventional negative electrode plates commonly used in the art, and the composition and preparation method thereof are well-known in the art. For example, the negative electrode plate may comprise a negative electrode current collector and a negative electrode active material layer provided on the negative electrode current collector. The negative electrode active material layer may comprise a negative electrode active material and an optional binder, an optional conductive agent, and other optional additives. The negative electrode active material is, for example, a carbonaceous material such as graphite (synthetic graphite or natural graphite), conductive carbon black, carbon fibers, etc., a metal or semi-metal material such as Si, Sn, Ge, Bi, Sn, In or an alloy thereof, a lithium-containing nitride or a lithium-containing oxide, a lithium metal or a lithium aluminum alloy, etc.

As an example, the conductive agent may include one of more of superconducting carbon, carbon black (for example, acetylene black, Ketjen black, etc), carbon dots, carbon nanotubes, graphene, and carbon nanofibers. The binder may include one or more of a butadiene styrene rubber (SBR), a water-soluble unsaturated resin of SR-1B, a water-based acrylic resin, polyvinyl alcohol (PVA), sodium alginate (SA), and carboxymethyl chitosan (CMCS). Other optional additives are for example a thickening agent (e.g., sodium carboxymethyl cellulose CMC-Na), a PTC thermistor material, etc.

[Separator]

In the present application, various conventional separators commonly used in the art can be used. In some embodiments, the separator can be selected from glass fibers, a non-woven fabric, a polyethylene film, a polypropylene film, a polyvinylidene fluoride film, and a multi-layer composite film of two or more of them.

In some embodiments, the positive electrode plate, the negative electrode plate and the separator can be manufactured into an electrode assembly by means of a winding process or a lamination process.

In some embodiments, the secondary battery may comprise an outer package. The outer package can be used to package the electrode assembly and electrolyte as described above.

In some embodiments, the outer package of the secondary battery may be a hard shell, such as a hard plastic shell, an aluminum shell, and a steel shell. The outer package of the secondary battery may also be a soft package, such as a pouch-type soft package. The material of the soft package may be plastic, for example one or more of polypropylene (PP), polybutylene terephthalate (PBT), and polybutylene succinate (PBS), etc.

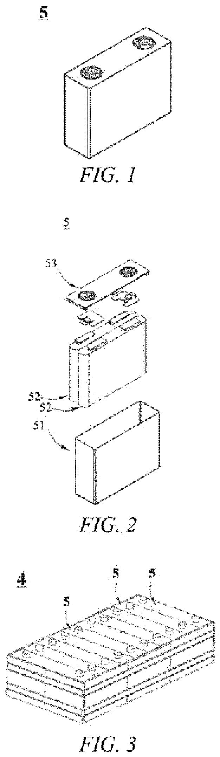

In the present application, the shape of the secondary battery is not particularly limited and may be of a cylindrical, square or any other shape. Fig. 1 is an exemplary secondary battery 5 with a square structure.

In some embodiments, referring to Fig. 2, the outer package may include a housing 51 and a cover plate 53, wherein the housing 51 may include a bottom plate and side plates connected to the bottom plate, and the bottom plate and the side plates enclose to form an accommodating cavity. The housing 51 has an opening in communication with the accommodating cavity, and the cover plate 53 is used for covering the opening to close the accommodating cavity. The positive electrode plate, the negative electrode plate and the separator can be subjected to a winding process or a lamination process to form an electrode assembly 52. The electrode assembly 52 is packaged in the accommodating cavity. The electrolyte infiltrates the electrode assembly 52. The number of the electrode assemblies 52 contained in the secondary battery 5 may be one or more, and may be adjusted according to requirements.

In some embodiments, the secondary battery can be assembled into a battery module, and the number of the secondary batteries contained in the battery module can be multiple, and the specific number can be adjusted according to the application and capacity of the battery module.

Fig. 3 is an exemplary battery module 4. Referring to Fig. 3, in the battery module 4, a plurality of secondary batteries 5 may be provided sequentially in the length direction of the battery module 4. Apparently, the secondary batteries can also be disposed in any other manner. Furthermore, the plurality of secondary batteries 5 can be fixed with fasteners.

Optionally, the battery module 4 may further comprise a shell having an accommodating space in which the plurality of secondary batteries 5 are accommodated.

In some embodiments, the above battery module may also be assembled into a battery pack, and the number of the battery modules contained in the battery pack can be adjusted according to the application and capacity of the battery pack.

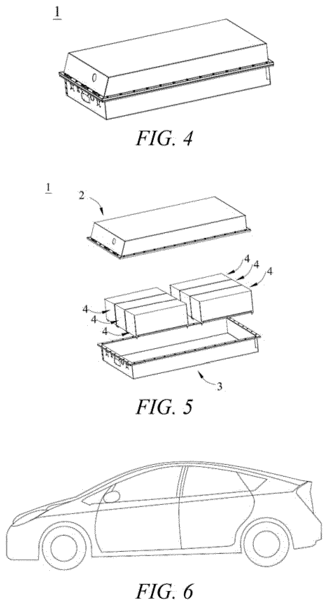

Figs. 4 and 5 are exemplary battery packs 1. Referring to Figs. 4 and 5, the battery pack 1 may comprise a battery case and a plurality of battery modules 4 arranged in the battery case. The battery case includes an upper case body 2 and a lower case body 3, and the upper case body 2 is used to cover the lower case body 3 to form a closed space for accommodating the battery modules 4. The plurality of battery modules 4 may be arranged in the battery case in any manner.

**Preparation method**

The present application further provides a method for preparing a lithium ion secondary battery, comprising the steps of: providing a positive electrode plate, wherein the positive electrode plate comprises a positive electrode active material and a positive electrode lithium-supplementing material comprising a lithium-rich metal oxide, and the lithium-rich metal oxide comprises one or more elements of Ni, Co, Fe, Mn, and Cu; providing an electrolyte, the electrolyte comprises an electrolyte lithium salt and a solvent, and has a percentage $\varepsilon$ of the total mass of a fluorine element in anions of the electrolyte lithium salt relative to the total mass of the electrolyte of < 14%, optionally $1.5\% \leq \varepsilon \leq 9.5\%$; and assembling the positive electrode plate, a negative electrode plate and the electrolyte to obtain a lithium ion secondary battery.

In some embodiments, the positive electrode plate can be prepared by the following steps: dispersing a positive electrode active material, a positive electrode lithium-supplementing material, an optional binder and an optional conductive agent into a solvent and stirring same until uniform to form a positive electrode slurry; coating the positive electrode slurry onto a positive electrode current collector, followed by drying, and cold pressing to form a positive electrode active material layer. The solvent may be N-methylpyrrolidone (NMP).

In some embodiments, the steps for preparing the positive electrode plate may further comprise: dispersing a positive electrode lithium-supplementing material, an optional binder and an optional conductive agent into a solvent and stirring same until uniform to form a lithium-supplementing slurry; coating the lithium-supplementing slurry onto a positive electrode current collector, followed by drying, and cold pressing to form a lithium-supplementing film layer. The solvent may be NMP. The lithium-supplementing slurry and the positive electrode slurry may be coated simultaneously or separately. The lithium-supplementing coating and the positive electrode coating may be dried simultaneously or separately, and may be cold-pressed simultaneously or separately.

It should be noted that, when the steps for preparing the positive electrode plate comprises the step of preparing the lithium-supplementing film layer, the positive electrode lithium-supplementing material can be omitted in the positive electrode slurry.

The materials used in the present application can be commercially available or prepared by the method known in the art, which can be suitably selected by a person skilled in the art according to the actual use environment.

In some embodiments, the positive electrode lithium-supplementing material can be prepared by the following method: mixing lithium oxide and the precursors of the metals and sintering same under a non-oxidizing gas atmosphere to obtain a lithium-rich metal oxide. The precursors of the metals can be selected from metal oxides, metal hydroxides, etc. The non-oxidizing gas atmosphere is, for example, an inert gas atmosphere, a nitrogen atmosphere, etc. The sintering can be carried out at a temperature of 600°C to 800°C. The sintering can be carried out for a period of 5 h-15 h, or 10 h-20 h, etc.

A step of crushing and classifying is further optionally included after sintering to obtain a lithium-rich metal oxide with an appropriate particle size distribution. In some embodiments, the lithium-rich metal oxide has a volume average particle size $D_v50$ of 3 $\mu$m-7 $\mu$m, optionally 3 $\mu$m-5 $\mu$m, or 4 $\mu$m-6 $\mu$m.

A step of washing is further optionally included after sintering. The impurities on the surface of the particles are washed away by the washing step, which facilitates to improve one or more of the energy density, cycling performance and storage performance of the battery. In the washing step, anhydrous ethanol can be used for washing. The washing can be carried out for a period of 0.5 h-1 h. The particles are dried after washing. The drying can be carried out at a temperature of 80°C to 200°C, for example 120°C to 160°C. The drying can be carried out for a period of 5 h-15 h, for example 8 h-12 h. In some embodiments, the washing step is carried out after the crushing and classifying step, which facilitates to more fully wash away the impurities and improve the purity of the lithium-rich metal oxide.

Taking $Li_2Cu_{x1}Ni_{1-x1-y1}M_{y1}O_2$ as an example to specifically illustrate the preparation method:

S1: the powders of $Li_2O$, NiO, CuO and an oxide of an optional M metal are weighed, and uniformly mixed by ball milling. In S1, $Li_2O$ can be appropriately excessive. For example, in the mixed powder, the ratio of the molar content of Li to the total molar content of the metal elements other than Li is 2 : 05 : 1 to 2.12 : 1. As an example, in the mixed powder, the molar ratio of Li, Ni to Cu elements is 2.05 : 0.4 : 0.6.

S2: the mixed powder is sintered under a non-oxidizing gas atmosphere (e.g., nitrogen atmosphere). In S2, the sintering can be carried out at a temperature of 600°C to 800°C, optionally 650°C to 750°C. The sintering can be carried out for a period of 5 h-15 h, optionally 8 h-10 h. After sintering, the lithium-rich metal oxide can be obtained by naturally cooling to room temperature. The sintered product can also be subjected to a subsequent crushing, classifying step and/or washing step to obtain a lithium-rich metal oxide.

In some embodiments, the temperature can be raised to the sintering temperature at a heating rate of 1°C/min to 10°C/min. Optionally, the heating rate is 1°C/min to 5°C/min, 3°C/min to 8°C/min, or 3°C/min to 5°C/min.

S3: The sintered product is crushed and classified to obtain a classified product. In S3, the classified product has a volume average particle size $D_v50$ of 3 $\mu$m-7 $\mu$m, further optionally 3 $\mu$m-5 $\mu$m, or 4 $\mu$m-6 $\mu$m.

S4: The sintered product is washed and dried to obtain the final lithium-rich metal oxide product. In S4, the washing can be carried out using anhydrous ethanol. The washing can be carried out for a period of 0.5 h-1 h. The drying can be carried out at a temperature of 80°C to 200°C, for example 120°C to 160°C.

In addition to the preparation method for the positive electrode plate of the present application, other configurations and preparation methods for the lithium ion secondary battery of the present application are well-known. For example, the negative electrode plate can be prepared as follows: dispersing a negative electrode active material, an optional conductive agent, an optional binder, etc., into a solvent (e.g., NMP or deionized water), coating same onto a negative electrode current collector after stirring uniformly, followed by drying and cold pressing to obtain a negative electrode plate.

In some embodiments, the positive electrode plate, separator and negative electrode plate can be formed into an electrode assembly by means of a winding process or a lamination process; then placing the electrode assembly in an outer package, injecting an electrolyte, followed by vacuum packaging, leaving to stand, formation, and shaping procedures to obtain a lithium ion secondary battery.

The optional technical features of the lithium ion secondary battery of the present application are also applicable to the preparation method of the present application.

## Device

The present application further provides a device comprising at least one of the lithium ion secondary battery, battery module or battery pack of the present application. The lithium ion secondary battery, battery module or battery pack may be used as a power source of the device or as an energy storage unit of the device. An example of the device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like.

The device can incorporate the lithium ion secondary battery, battery module or battery pack according to the requirements for using the device.

Fig. 6 shows an exemplary device. The device may be a pure electric vehicle, a hybrid electric vehicle, a plug-in hybrid electric vehicle or the like. A battery pack or a battery module can be used in the device according to the actual usage requirements.

As another example, the device may be a mobile phone, a tablet computer, a laptop, etc. Such device is generally required to be thin and light, and a lithium ion secondary battery can be used as a power supply.

## Examples

The following examples more specifically describe the content disclosed in the present application, and these examples are only used for explanatory description. Unless otherwise noted, all parts, percentages, and ratios reported in the following examples are on a weight basis, and all reagents used in the examples are commercially available and used directly without further treatment, and the instruments used in the examples are commercially available.

## I. Preparation of battery

## (I) Preparation of positive electrode lithium-supplementing material of $Li_2Cu_{0.6}Ni_{0.4}O_2$:

(1) Powders of $Li_2O$, NiO and CuO are weighed, and uniformly mixed by ball milling. In the mixed powder, the molar ratio of Li, Ni to Cu elements is 2.05 : 0.4 : 0.6.
(2) Under a nitrogen atmosphere, the mixed powder is sintered by heating up to 680°C at a heating rate of 3°C/min and keeping the temperature for 10 h. Cool down naturally after sintering.
(3) The sintered product is crushed and classified to obtain a classified product with a $D_v50$ of 5 μm.
(4) The classified product is washed with anhydrous ethanol for 0.5 h, and then dried in a blast oven at 160°C for 12 h to obtain $Li_2Cu_{0.6}Ni_{0.4}O_2$.

The positive electrode lithium-supplementing material of $Li_2Cu_{x1}Ni_{1-x1}O_2$ with other Ni/Cu ratios can be prepared by referring to the above method.

## (II) Preparation of positive electrode lithium-supplementing material of $Li_2NiO_2$:

(1) A nickel-based precursor of $Ni(OH)_2$ is synthesized by a co-precipitation method;
(2) The precursor of $Ni(OH)_2$ and lithium oxide of $Li_2O$ (with a purity of > 97%, Aldrich) are mixed by ball milling in a molar ratio of Li/Ni = 3 : 1, the mixing is carried out for 5 h at a speed of 500 rpm to obtain a mixed powder; and
(3) Under a nitrogen atmosphere, the mixed powder is sintered at 250°C for 2 h, 450°C for 2 h, and then heated to 700°C for 10 h at a heating rate of 1°C/min to obtain $Li_2NiO_2$.

## (III) Preparation of positive electrode lithium-supplementing material of $Li_5FeO_4$:

Lithium oxide (with a purity of > 97%, Aldrich) and iron oxide (with a purity of > 99%, Aldrich) are uniformly mixed in a molar ratio of Li/Fe atoms of 5 : 1, and pretreated at 450°C for 8 h under an argon atmosphere, and then ground uniformly, then heated to 750°C at a rate of 5°C/min, sintered at that temperature for 18 h, and finally cooled to room temperature naturally to obtain a positive electrode lithium-supplementing material of $Li_5FeO_4$.

**(IV) Preparation of positive electrode lithium-supplementing material of $Li_6CoO_4$:**

In a drying room, lithium oxide (with a purity of > 97%, Aldrich) and cobalt oxide (with a purity of > 99%, Aldrich) are ball-milled for 12 h in a molar ratio of Li/Co atoms of 6 : 1, and after uniformly mixing, heated at 700°C for 12 h under an argon atmosphere, and finally cooled to room temperature naturally to obtain a positive electrode lithium-supplementing material of $Li_6CoO_4$.

**(V) Preparation of lithium ion secondary battery**

**Example 1**

Preparation of positive electrode plate

A positive electrode active material of $LiFePO_4$ (abbreviated as LFP), a conductive agent of acetylene black, a binder of polyvinylidene fluoride (PVDF) and a positive electrode lithium-supplementing material of $Li_2Cu_{x1}Ni_{1-x1}O_2$ (x1 = 0.6) are mixed in a weight ratio of $(98 \times 0.97) : (98 \times 0.01) : (98 \times 0.02) : 2$, fully stirred in a solvent of NMP and uniformly mixed to obtain a positive electrode slurry. The positive electrode slurry is coated onto the two opposite surfaces of a positive electrode current collector of aluminum foil, followed by drying and cold pressing to obtain a positive electrode plate. wherein the positive electrode active material layer has an areal density of 19.5 mg/cm$^2$ and a compacted density of 2.4 g/cm$^3$.

Preparation of negative electrode plate

A negative electrode active material of synthetic graphite, a conductive agent of acetylene black, a binder of a styrene butadiene rubber (SBR) and a thickening agent of sodium carboxymethyl cellulose (CMC-Na) are dispersed into a solvent of deionized water in a weight ratio of 96.5 : 0.7 : 1.8 : 1, followed by fully stirring and uniformly mixing to obtain a negative electrode slurry. The negative electrode slurry is coated onto two opposite surfaces of a negative electrode current collector copper foil, followed by drying and cold pressing to obtain a negative electrode plate, wherein the negative electrode active material layer has an areal density of 9.7 mg/cm$^2$ and a compacted density of 1.7 g/cm$^3$.

Preparation of electrolyte

Ethylene carbonate (EC) and methyl ethyl carbonate (EMC) are uniformly mixed in a volume ratio of 3 : 7 to obtain a solvent; then an electrolyte lithium salt of LiTFSI and LiDFOP are dissolved in the solvent, and uniformly mixed to obtain an electrolyte. The concentration of LiTFSI in the electrolyte is 0.8 M (mol/L), and the concentration of LiDFOP is 0.2 M.

Preparation of lithium ion secondary battery

A positive electrode plate, a porous polyethylene (PE)/polypropylene (PP) composite separator, and a negative electrode plate are stacked in sequence, and then wound to obtain an electrode assembly; the electrode assembly is put into an outer package, which is filled with an electrolyte and packaged to obtain a lithium ion secondary battery.

**Examples 2-27 and Comparative Examples 1-2**

The preparation of the lithium ion secondary batteries is similar to that of example 1, except that the relevant preparation parameters for the positive electrode plates and electrolytes have been adjusted, see table 1 for details. In addition, in Example 27, the positive electrode lithium-supplementing material is provided on the surface of the positive electrode active material layer away from the positive electrode current collector in the form of a lithium-supplementing film layer. PVDF is used as a binder in the lithium-supplementing film layer.

**Examples 28-48 and Comparative Examples 3-4**

The preparation of the lithium ion secondary batteries is similar to that of example 1, except that the relevant preparation parameters for the positive electrode plates and electrolytes have been adjusted, the positive electrode active material is $LiNi_{0.5}Co_{0.2}Mn_{0.3}O_2$ (abbreviated as NCM523); the positive electrode active material layer has an areal density of 18 $mg/cm^2$ and a compacted density of 3.4 $g/cm^3$; the negative electrode active material layer has an areal density of 10.7 $mg/cm^2$ and a compacted density of 1.7 $g/cm^3$; see Table 3 for other parameters. In addition, in Example 48, the positive electrode lithium-supplementing material is provided on the surface of the positive electrode active material layer away from the positive electrode current collector in the form of a lithium-supplementing film layer. PVDF is used as a binder in the lithium-supplementing film layer.

In tables 1 and 3, the mass percentage of the free lithium refers to the mass percentage thereof in the lithium-rich metal oxide. The content of the positive electrode lithium-supplementing material refers to the mass percentage content thereof in the positive electrode active material layer. The percentage of fluorine $\varepsilon$ refers to the total mass of a fluorine element in the anions of the electrolyte lithium salt relative to the total mass of the electrolyte.

## II. Performance test of secondary battery:

1. A sample of the electrolyte before being injected into a battery is taken, and the percentage of fluorine $\varepsilon$ is determined by the method described above.

2. Initial specific charge/discharge capacity test

At normal temperature (25°C), the battery is charged at a constant current rate of 1 C to the end-of-charge voltage (4.25 V for LFP batteries, and 4.35 V for NCM batteries), and then charged at a constant voltage to a current of 0.05 C, and the charge capacity at this moment is recorded, i.e., the charge capacity of the first cycle; then discharged at a constant current of 1 C to an end-of-discharge voltage (2.5 V for LFP batteries, and 2.8 V for NCM batteries), and the discharge capacity at this moment is recorded, i.e., the discharge capacity of the first cycle.

Initial specific charge capacity (mAh/g) = charge capacity of the first cycle/ mass of the positive electrode active material Initial specific discharge capacity (mAh/g) = discharge capacity of the first cycle/mass of the positive electrode active material

3. High-temperature cycling performance test

At 45°C, the battery is charged at a constant current rate of 1 C to the end-of-charge voltage, and then charged at a constant voltage to a current of 0.05 C, then discharged at a constant current of 1 C to an end-of-discharge voltage, and left to stand for 5 min, which is a cyclic charge/discharge process, the discharge capacity at this moment is recorded, i.e., the discharge capacity of the first cycle. The battery is subjected to cyclic charge/discharge tests according to the above method, and the discharge capacity in each cycle is recorded.

Cycling capacity retention rate of the battery after Xth cycle (%) = discharge capacity of the Xth cycle/discharge capacity of the first cycle $\times$ 100%

4. Measurement of amount of metal ions deposited on the negative electrode plate

The battery after high-temperature cycling performance test 3 is disassembled, and the negative electrode plate is taken out; the negative electrode active material layer of the negative electrode plate is peeled off, and 2 g of the negative electrode active material layer is added into an acid solution (e.g., aqua regia) for digestion, which can be carried out under stirring (e.g., mechanical stirring or microwave stirring) for 30 min; and the digested solution is added into ICAP 7400 spectrometer, such that the amount of the metal ions deposited in the negative electrode plate can be quantitatively analyzed.

5. Overcharge performance test

a) fully charging of battery: at normal temperature (25°C), the battery is charged at a constant current rate of 1 C to the end-of-charge voltage, and then charged at a constant voltage to a current of 0.05 C, the battery is in a fully charged state at this moment (100% SOC).

b) the battery in a fully charged state is charged at a constant current rate of 1 C until the battery fails (for the standard of battery failure, reference can be made to EUCAR battery abuse standard grade, and the battery is judged as failure when it reaches a grade of HL3 or more (the battery starts to smoke)), and the charging is stopped, the SOC of the battery at this moment is recorded.

6. High-temperature safety performance test

The test can be carried out by referring to GB/T 31485-2015 standard. The specific steps comprise:

a) the battery is fully charged according to step a) in test 4;

b) The fully charged battery with NCM as the positive electrode is placed into a hot box (in the case of the battery with LFP as the positive electrode, heating plates are provided around it), and heated to 80°C at a heating rate of 5°C/min; then the temperature of the hot box is increased by 5°C at a rate of 5°C/min, and the temperature is kept for 30 min. If the battery does not fail, the heating and temperature-maintaining in the above manner are continued until the battery fails (for the standard of battery failure, reference can be made to EUCAR battery abuse standard grade, and the battery is judged as failure when the battery reaches a grade of HL3 or more (the battery starts to smoke)), the temperature of the hot box when the battery fails is recorded. The higher the failure temperature, the better the high-temperature safety performance of the battery. The maximum temperature reached by the battery after battery failure can also be recorded if desired. The lower the maximum temperature reached by the battery after battery failure, the better the high-temperature safety performance of the battery.

7. High-temperature storage performance test

5 batteries are taken, and charged at normal temperature (25°C) at a constant current rate of 1 C to the end-of-charge voltage, and then charged at a constant voltage to 0.05 C; then discharged at a constant current rate of 1 C to the end-of-discharge voltage, and the discharge capacity is measured as $E_0$; then the fully charged battery is placed in an oven at 60°C for 30 days; then the battery is taken out, and the discharge capacity thereof is measured immediately at normal temperature (25°C) and recorded as $E_n$.

The capacity retention rate of the battery after being stored at 60°C for 30 days = $(E_n-E_0) / E_0 \times 100\%$. The average value of the high-temperature storage capacity retention rates of 5 batteries is taken.

In the above tests 3-7, the end-of-charge voltage of $LiFePO_4$ battery is 3.65 V, and the end-of-discharge voltage is 2.5 V; the end-of-charge voltage of $LiNi_{0.5}Co_{0.2}Mn_{0.3}O_2$ battery is 4.35 V, and the end-of-discharge voltage is 2.8 V.

The batteries of Examples 1-27 and Comparative Examples 1-2 are referred to as LFP batteries for short, and the test results are shown in table 2. The batteries of Examples 28-48 and Comparative Examples 3-4 are referred to as NCM batteries for short, and the test results are shown in table 4.

Table 1: preparation parameters for LFP battery

| No. | Positive electrode active material layer | | | Electrolyte | |
| | Positive electrode lithium-supplementing material | | Content of the positive electrode lithium-supplementing material wt% | | |
| | Type | Mass percentage of free lithium, wt% | | Lithium salt and concentration thereof | Percentage of fluorine, $\varepsilon$ |
|---|---|---|---|---|---|
| Comparative Example 1 | / | / | 0 | 1.5 M $LiPF_6$ | 14% |
| Comparative Example 2 | $Li_2Cu_{0.6}Ni_{0.4}O_2$ | 0.7 | 2 | 1.5 M $LiPF_6$ | 14% |
| Example 1 | $Li_2Cu_{0.6}Ni_{0.4}O_2$ | 0.7 | 2 | 0.8 M LiTFSI + 0.2 M LiDFOP | 8.0% |
| Example 2 | $Li_2Cu_{0.6}Ni_{0.4}O_2$ | 0.7 | 2 | 0.6 M $LiPF_6$ + 0.4 M LiFSI | 6.8% |
| Example 3 | $Li_2Cu_{0.6}Ni_{0.4}O_2$ | 0.7 | 2 | 1M $LiBF_4$ | 6.2% |
| Example 4 | $Li_2Cu_{0.6}Ni_{0.4}O_2$ | 0.7 | 2 | 0.3 M $LiPF_6$ + 0.7 M LiFSI | 5.0% |
| Example 5 | $Li_2Cu_{0.6}Ni_{0.4}O_2$ | 0.7 | 2 | 3M LiFSI | 9.3% |
| Example 6 | $Li_2Cu_{0.6}Ni_{0.4}O_2$ | 0.7 | 2 | 0.1 M $LiPF_6$ + 0.9 M LiFSI | 3.7% |
| Example 7 | $Li_2Cu_{0.6}Ni_{0.4}O_2$ | 0.7 | 2 | 1 M LiDFOB | 3.1% |

(continued)

| No. | Positive electrode active material layer | | | Electrolyte | |
| --- | --- | --- | --- | --- | --- |
| | Positive electrode lithium-supplementing material | | Content of the positive electrode lithium-supplementing material wt% | | |
| | Type | Mass percentage of free lithium, wt% | | Lithium salt and concentration thereof | Percentage of fluorine, $\varepsilon$ |
| Example 8 | $Li_2Cu_{0.6}Ni_{0.4}O_2$ | 0.7 | 2 | 0.8 M LiFSI + 0.1 M $LiPF_6$ + 0.1 M LiD-FOB | 3.7% |
| Example 9 | $Li_2Cu_{0.6}Ni_{0.4}O_2$ | 0.7 | 2 | 0.8 M LiFSI+0.2 M $LiBF_4$ | 3.7% |
| Example 10 | $Li_2Cu_{0.6}Ni_{0.4}O_2$ | 0.7 | 2 | 0.8 M LiFSI + 0.2 M LiDFOB | 3.1% |
| Example 11 | $Li_2Cu_{0.6}Ni_{0.4}O_2$ | 0.7 | 2 | 1 M LiFSI | 3.1% |
| Example 12 | $Li_2Cu_{0.6}Ni_{0.4}O_2$ | 0.7 | 2 | 0.8 M LiFSI+0.2 M LiBOB | 2.5% |
| Example 13 | $Li_2Cu_{0.6}Ni_{0.4}O_2$ | 0.7 | 2 | 0.5 M LiFSI | 1.6% |
| Example 14 | $Li_2Cu_{0.6}Ni_{0.4}O_2$ | 0.7 | 10 | 1 M LiFSI | 3.1% |
| Example 15 | $Li_2Cu_{0.6}Ni_{0.4}O_2$ | 0.7 | 8 | 1M LiFSI | 3.1% |
| Example 16 | $Li_2Cu_{0.6}Ni_{0.4}O_2$ | 0.7 | 6 | 1M LiFSI | 3.1% |
| Example 17 | $Li_2Cu_{0.6}Ni_{0.4}O_2$ | 0.7 | 4 | 1M LiFSI | 3.1% |
| Example 18 | $Li_2Cu_{0.6}Ni_{0.4}O$ | 2.5 | 3 | 1M LiFSI | 3.1% |
| Example 19 | $Li_2Cu_{0.6}Ni_{0.4}O$ | 3.4 | 1 | 1M LiFSI | 3.1% |
| Example 20 | $Li_2Cu_{0.7}Ni_{0.3}O_2$ | 0.7 | 2 | 1M LiFSI | 3.1% |
| Example 21 | $Li_2Cu_{0.3}Ni_{0.7}O_2$ | 0.7 | 2 | 1M LiFSI | 3.1% |
| Example 22 | $Li_2Cu_{0.8}Ni_{0.2}O_2$ | 0.7 | 2 | 1M LiFSI | 3.1% |
| Example 23 | $Li_2Cu_{0.2}Ni_{0.8}O_2$ | 0.7 | 2 | 1M LiFSI | 3.1% |
| Example 24 | $Li_5FeO_4$ | 2.1 | 1.5 | 1M LiFSI | 3.1% |
| Example 25 | $Li_6CoO_5$ | 1.7 | 1 | 1M LiFSI | 3.1% |
| Example 26 | $Li_2NiO_2$ | 1.5 | 5 | 1M LiFSI | 3.1% |
| Example 27 | $Li_2Cu_{0.6}Ni_{0.4}O$ | 0.7 | 2 | 1M LiFSI | 3.1% |
| NB: Example 3 is not according to the invention. | | | | | |

Table 2: Test results of LFP battery

| No. | The amount of Cu deposited on the negative electrode, wt% | The amount of Ni deposited on the negative electrode, wt% | Initial specific charge capacity mAh/g | Initial specific discharge capacity mAh/g | Capacity retention rate after cycling at 45°C for 100 cycles % | Capacity retention rate after storage at 60°C for 30 days % | SOC of overcharge failure % | Temperature of thermal failure °C | Maximum temperature after thermal failure °C |
|---|---|---|---|---|---|---|---|---|---|
| Comparative Example 1 | 0.0032 | 0.0004 | 156.6 | 141.7 | 95.2 | 95.0 | 117.7 | 265.4 | 567 |
| Comparative Example 2 | 0.142 | 0.016 | 166.2 | 148.8 | 95.8 | 96.2 | 118.6 | 270.5 | 545 |
| Example 1 | 0.119 | 0.013 | 164.8 | 147.9 | 95.7 | 96.0 | 119.3 | 272.8 | 457 |
| Example 2 | 0.094 | 0.012 | 163.4 | 148.4 | 96.0 | 96.3 | 119.7 | 277.9 | 508 |
| Example 3 | 0.068 | 0.006 | 162.4 | 146.8 | 96.2 | 95.7 | 119.6 | 274.1 | 479 |
| Example 4 | 0.061 | 0.008 | 163.4 | 148.0 | 96.1 | 96.7 | 120.8 | 277.5 | 474 |
| Example 5 | 0.067 | 0.0051 | 165.2 | 151.1 | 96.8 | 96.7 | 120.6 | 278.7 | 403 |
| Example 6 | 0.039 | 0.0026 | 164.2 | 149.2 | 96.9 | 96.9 | 120.0 | 281.5 | 452 |
| Example 7 | 0.038 | 0.0025 | 164.0 | 150.0 | 96.4 | 96.6 | 120.4 | 280.6 | 433 |
| Example 8 | 0.033 | 0.004 | 162.7 | 147.0 | 96.2 | 96.8 | 120.4 | 278.3 | 448 |
| Example 9 | 0.028 | 0.0032 | 162.9 | 146.0 | 96.6 | 96.7 | 120.8 | 277.6 | 442 |
| Example 10 | 0.029 | 0.0034 | 163.2 | 147.9 | 96.9 | 96.4 | 120.2 | 280.8 | 454 |
| Example 11 | 0.027 | 0.0029 | 164.3 | 150.9 | 97.5 | 97.8 | 121.4 | 282.3 | 446 |
| Example 12 | 0.023 | 0.0022 | 163.1 | 147.9 | 97.5 | 97.4 | 121.7 | 281.7 | 438 |
| Example 13 | 0.014 | 0.0021 | 162.3 | 147.7 | 96.6 | 97.1 | 122.3 | 281.6 | 433 |
| Example 14 | 0.089 | 0.008 | 179.8 | 136.5 | 97.6 | 98.1 | 133.8 | 286.4 | 418 |
| Example 15 | 0.076 | 0.0062 | 174.2 | 138.2 | 98.8 | 98.3 | 131.6 | 285.2 | 423 |
| Example 16 | 0.058 | 0.0051 | 171.1 | 140.6 | 99.7 | 99.9 | 125.7 | 284.4 | 427 |
| Example 17 | 0.044 | 0.0043 | 167.4 | 144.1 | 99.4 | 99.6 | 123.0 | 283.8 | 432 |
| Example 18 | 0.032 | 0.003 | 165.6 | 146.6 | 99.0 | 98.7 | 120.3 | 282.6 | 441 |
| Example 19 | 0.011 | 0.0015 | 161.3 | 147.2 | 96.1 | 96.8 | 119.0 | 280.0 | 448 |
| Example 20 | 0.034 | 0.0016 | 165.1 | 148.7 | 96.6 | 96.6 | 121.1 | 284.4 | 421 |

(continued)

| No. | The amount of Cu deposited on the negative electrode, wt% | The amount of Ni deposited on the negative electrode, wt% | Initial specific charge capacity mAh/g | Initial specific discharge capacity mAh/g | Capacity retention rate after cycling at 45°C for 100 cycles % | Capacity retention rate after storage at 60°C for 30 days % | SOC of overcharge failure % | Temperature of thermal failure °C | Maximum temperature after thermal failure °C |
|---|---|---|---|---|---|---|---|---|---|
| Example 21 | 0.026 | 0.0012 | 164.8 | 148.9 | 96.2 | 96.8 | 120.3 | 283.9 | 422 |
| Example 22 | 0.014 | 0.0029 | 164.4 | 149.9 | 97.3 | 97.0 | 121.6 | 283.6 | 448 |
| Example 23 | 0.011 | 0.0034 | 163.8 | 148.1 | 97.0 | 96.9 | 121.5 | 280.2 | 452 |
| Example 24 | The deposition amount of Fe: 0.05 | | 164.3 | 146.8 | 95.4 | 95.6 | 118.0 | 273.6 | 438 |
| Example 25 | The amount of deposited Co: 0.02 | | 167.2 | 145.4 | 95.5 | 95.4 | 117.5 | 278.7 | 488 |
| Example 26 | / | 0.006 | 169.5 | 142.1 | 98.5 | 98.2 | 116.0 | 276.8 | 509 |
| Example 27 | 0.032 | 0.0031 | 168.0 | 150.0 | 96.1 | 97.0 | 125.5 | 288.1 | 402 |

It can be seen from the data of Examples 1-13 and Comparative Examples 1-2 that by adding a lithium-rich metal oxide to the positive electrode active material layer of the LFP battery as the positive electrode lithium-supplementing material, containing one or more elements of Ni, Co, Fe, Mn and Cu in the lithium-rich metal oxide, and allowing the electrolyte to satisfy $\varepsilon$ < 14%, the active lithium consumed by the SEI film formation and side reaction can be effectively compensated, and less amount of metal ions are dissolved in the battery. Therefore, the LFP battery may not only have a higher initial discharge capacity, high-temperature cycling performance and high temperature storage performance, but also the failure temperature of the battery in the high-temperature safety test is significantly increased, thus achieving higher high-temperature safety performance. In addition, the maximum temperature reached by the battery after the thermal failure is also significantly reduced, further indicating that the battery has an improved high-temperature safety performance.

In Comparative Example 1, no positive electrode lithium-supplementing material is added, and the content of a fluorine element in the anions of the electrolyte lithium salt in the electrolyte is high, such that the initial discharge capacity, high-temperature cycling performance and high-temperature storage performance of the battery are all low, and the failure temperature of the battery in the high-temperature safety test is low, and the temperature reached after failure is high, so the high-temperature safety performance is poor.

In Comparative Example 2, the positive electrode lithium-supplementing material is added, the initial discharge capacity, high-temperature cycling performance and high-temperature storage performance of the battery are improved, but the content of fluorine element in the anions of the electrolyte lithium salt in the electrolyte is relatively high, which aggravates the phenomenon of metal dissolution of the positive electrode lithium-supplementing material, and the high-temperature safety performance of the battery is still poor.

It can be seen from the results of Examples 11, 14 to 19 that adding an appropriate amount of a positive electrode lithium-supplementing material in the positive electrode active material layer allows the battery to have higher high-temperature safety performance as well as higher initial discharge capacity, high-temperature cycling performance and high-temperature storage performance. In addition, the increase of the addition amount of the positive electrode lithium-supplementing material can further improve the overcharge performance of the battery.

It can be seen from the results of Examples 11, 20 to 23 that in the positive electrode lithium-supplementing material of $Li_2Cu_{x1}Ni_{1-x1-y1}M_{y1}O_2$, when the number ratio of Ni/Cu atoms is within an appropriate range, the initial discharge capacity, and the high-temperature cycling performance and high-temperature storage performance of the battery can be improved.

Table 3: Preparation parameters for NCM battery

| No. | Positive electrode active material layer | | | Electrolyte | |
| | Positive electrode lithium-supplementing material | | Content of the positive electrode lithium-supplementing material wt% | | |
| | Type | Mass percentage of free lithium, wt% | | Lithium salt and concentration thereof | Percentage of fluorine, $\varepsilon$ |
|---|---|---|---|---|---|
| Comparative Example 3 | / | / | 0 | 1.5 M $LiPF_6$ | 14% |
| Comparative Example 4 | $Li_2Cu_{0.6}Ni_{0.4}O_2$ | 0.7 | 2 | 1.5 M $LiPF_6$ | 14% |
| Example 28 | $Li_2Cu_{0.6}Ni_{0.4}O_2$ | 0.7 | 2 | 0.8 M LiTFSI + 0.2 M LiDFOP | 8.0% |
| Example 29 | $Li_2Cu_{0.6}Ni_{0.4}O_2$ | 0.7 | 2 | 0.6 M $LiPF_6$ + 0.4 M LiFSI | 6.8% |
| Example 30 | $Li_2Cu_{0.6}Ni_{0.4}O_2$ | 0.7 | 2 | 1 M $LiBF_4$ | 6.2% |
| Example 31 | $Li_2Cu_{0.6}Ni_{0.4}O_2$ | 0.7 | 2 | 0.3 M $LiPF_6$ + 0.7 M LiFSI | 5.0% |
| Example 32 | $Li_2Cu_{0.6}Ni_{0.4}O_2$ | 0.7 | 2 | 3 M LiFSI | 9.3% |
| Example 33 | $Li_2Cu_{0.6}Ni_{0.4}O_2$ | 0.7 | 2 | 0.1 M $LiPF_6$ + 0.9 M LiFSI | 3.7% |
| Example 34 | $Li_2Cu_{0.6}Ni_{0.4}O_2$ | 0.7 | 2 | 1M LiDFOB | 3.1% |

(continued)

| No. | Positive electrode active material layer | | | Electrolyte | |
| | Positive electrode lithium-supplementing material | | Content of the positive electrode lithium-supplementing material wt% | | |
| | Type | Mass percentage of free lithium, wt% | | Lithium salt and concentration thereof | Percentage of fluorine, $\varepsilon$ |
|---|---|---|---|---|---|
| Example 35 | $Li_2Cu_{0.6}Ni_{0.4}O_2$ | 0.7 | 2 | 0.8 M LiFSI + 0.1 M $LiPF_6$ + 0.1 M LiD-FOB | 3.7% |
| Example 36 | $Li_2Cu_{0.6}Ni_{0.4}O_2$ | 0.7 | 2 | 0.8 M LiFSI+0.2 M $LiBF_4$ | 3.7% |
| Example 37 | $Li_2Cu_{0.6}Ni_{0.4}O_2$ | 0.7 | 2 | 0.8 M LiFSI + 0.2 M LiDFOB | 3.1% |
| Example 38 | $Li_2Cu_{0.6}Ni_{0.4}O_2$ | 0.7 | 2 | 1 M LiFSI | 3.1% |
| Example 39 | $Li_2Cu_{0.6}Ni_{0.4}O_2$ | 0.7 | 2 | 0.8 M LiFSI + 0.2 M LiBOB | 2.5% |
| Example 40 | $Li_2Cu_{0.6}Ni_{0.4}O_2$ | 0.7 | 2 | 0.5 M LiFSI | 1.6% |
| Example 41 | $Li_2Cu_{0.7}Ni_{0.3}O_2$ | 0.7 | 2 | 1 M LiFSI | 3.1% |
| Example 42 | $Li_2Cu_{0.3}Ni_{0.7}O_2$ | 0.7 | 2 | 1 M LiFSI | 3.1% |
| Example 43 | $Li_2Cu_{0.8}Ni_{0.2}O_2$ | 0.7 | 2 | 1 M LiFSI | 3.1% |
| Example 44 | $Li_2Cu_{0.2}Ni_{0.8}O_2$ | 0.7 | 2 | 1 M LiFSI | 3.1% |
| Example 45 | $Li_5FeO_4$ | 2.1 | 1.5 | 1 M LiFSI | 3.1% |
| Example 46 | $Li_6CoO_5$ | 1.7 | 1 | 1 M LiFSI | 3.1% |
| Example 47 | $Li_2NiO_2$ | 1.5 | 5 | 1 M LiFSI | 3.1% |
| Example 48 | $Li_2Cu_{0.6}Ni_{0.4}O_2$ | 0.7 | 2 | 1 M LiFSI | 3.1% |
| NB: Example 30 is not according to the invention. | | | | | |

Table 4: Test results of NCM battery

| No. | The amount of Cu deposited on the negative electrode, wt% | The amount of Ni deposited on the negative electrode, wt% | Initial specific charge capacity, mAh/g | Initial specific discharge capacity, mAh/g | Capacity retention rate after cycling at 45°C for 700 cycles % | Capacity retention rate after storage at 60°C for 30 days % | Temperature of thermal failure °C |
|---|---|---|---|---|---|---|---|
| Comparative Example 3 | 0.0041 | 0.0004 | 199.2 | 177.0 | 95.8 | 96.6 | 151 |
| Comparative Example 4 | 0.155 | 0.019 | 209.8 | 172.0 | 97.2 | 97.2 | 154.4 |
| Example 28 | 0.13 | 0.0164 | 210.2 | 172.7 | 97.9 | 97.8 | 165.4 |
| Example 29 | 0.126 | 0.0142 | 208.4 | 173.1 | 97.5 | 97.9 | 169.5 |
| Example 30 | 0.084 | 0.0089 | 210.3 | 173.3 | 97.8 | 97.6 | 175.6 |
| Example 31 | 0.079 | 0.0082 | 210.6 | 173.3 | 97.9 | 97.9 | 178.3 |
| Example 32 | 0.067 | 0.0078 | 211.8 | 174.4 | 98.1 | 98.2 | 190.4 |
| Example 33 | 0.065 | 0.0058 | 209.3 | 173.6 | 98.2 | 98.5 | 177.1 |

(continued)

| No. | The amount of Cu deposited on the negative electrode, wt% | The amount of Ni deposited on the negative electrode, wt% | Initial specific charge capacity, mAh/g | Initial specific discharge capacity, mAh/g | Capacity retention rate after cycling at 45°C for 700 cycles % | Capacity retention rate after storage at 60°C for 30 days % | Temperature of thermal failure °C |
|---|---|---|---|---|---|---|---|
| Example 34 | 0.048 | 0.0043 | 208.5 | 173.3 | 98.4 | 98.4 | 178.5 |
| Example 35 | 0.042 | 0.0044 | 209.8 | 173.8 | 98.5 | 98.7 | 180.8 |
| Example 36 | 0.042 | 0.004 | 209.8 | 173.8 | 98.5 | 99.0 | 179.5 |
| Example 37 | 0.039 | 0.0039 | 210.3 | 174.0 | 98.5 | 98.9 | 182.9 |
| Example 38 | 0.035 | 0.0032 | 210.9 | 174.2 | 98.7 | 99.2 | 184.3 |
| Example 39 | 0.021 | 0.002 | 209.7 | 173.9 | 98.4 | 98.6 | 184.8 |
| Example 40 | 0.013 | 0.001 | 208.9 | 173.6 | 98.2 | 98.8 | 186.3 |
| Example 41 | 0.061 | 0.0025 | 209.2 | 173.4 | 96.6 | 98.3 | 185.9 |
| Example 42 | 0.059 | 0.003 | 210.1 | 173.7 | 96.8 | 98.5 | 184.8 |
| Example 43 | 0.028 | 0.0072 | 211.1 | 174.0 | 97.3 | 98.7 | 182.5 |
| Example 44 | 0.019 | 0.0069 | 211.5 | 173.2 | 97.0 | 98.6 | 178.4 |
| Example 45 | The deposition amount of Fe: 0.06 | | 206.9 | 172.1 | 95.4 | 97.3 | 178.3 |
| Example 46 | The deposition amount of Co: 0.03 | | 209.8 | 170.7 | 95.5 | 97.1 | 177.5 |
| Example 47 | / | 0.009 | 214.1 | 168.9 | 98.0 | 99.2 | 166.4 |
| Example 48 | 0.043 | 0.0041 | 210.6 | 173.3 | 96.1 | 98.7 | 188.4 |

It can be seen from the comparison between Examples 28-40 and Comparative Examples 3-4 that by adding a lithium-rich metal oxide to the positive electrode active material layer of the NCM battery as the positive electrode lithium-supplementing material, containing one or more elements of Ni, Co, Fe, Mn and Cu in the lithium-rich metal oxide, and allowing the electrolyte to satisfy $\varepsilon < 14\%$, the battery is allowed to have a higher initial discharge capacity, and the failure temperature of the battery in a high temperature environment is significantly increased, such that the battery has higher high-temperature safety performance. In addition, the amount of dissolution of the metal ions in the battery is significantly reduced, which also facilitates to improve the initial discharge capacity of the battery while allowing the battery to have higher high-temperature cycling performance and high-temperature storage performance.

In Comparative Example 3, no positive electrode lithium-supplementing material is not added, and the content of a fluorine element in the anions of the electrolyte lithium salt in the electrolyte is high, such that the high-temperature cycling performance and high-temperature storage performance of the battery are both low, and the failure temperature of the battery in the high-temperature safety test is low, so the high-temperature safety performance is poor.

In Comparative Example 4, the positive lithium-supplementing material is added, the high-temperature cycling performance and high-temperature storage performance of the battery are improved, but the content of fluorine in the anions of the electrolyte lithium salt in the electrolyte is relatively high, which aggravates the phenomenon of metal dissolution of the positive electrode lithium-supplementing material, and the high-temperature safety performance of the battery is still poor.

It can be seen from the results of Examples 38, 41 to 44 that in the positive electrode lithium-supplementing material of $Li_2Cu_{x1}Ni_{1-x1-y1}M_{y1}O_2$, when the number ratio of Ni/Cu atoms is within a suitable range, the initial discharge capacity, and the high-temperature cycling performance and high-temperature storage performance of the battery can be improved.

Described above are merely specific embodiments of the present application, and the scope of protection of the present application is not limited thereto. Therefore, the scope of protection of the present application shall be determined by the claims.

**Claims**

1.  A lithium ion secondary battery (5), comprising a positive electrode plate, a negative electrode plate and an electrolyte, wherein

    the positive electrode plate comprises a positive electrode active material and a positive electrode lithium-supplementing material comprising a lithium-rich metal oxide, and the lithium-rich metal oxide is selected from one or more of $Li_xM^1O_{0.5(2+x)}$, $Li_2M^3O_4$, $Li_3M^4O_4$, $Li_5M^5O_4$, and $Li_5M^6O_6$, where:

$$x \geq 1,$$

    $M^1$ is selected from one or more of Ni, Co, Fe, Mn, Zn, Mg, Ca, Cu and Sn,
    $M^3$ is selected from one or more of Ni, Co, Fe, Mn, Sn, Cr, V, and Nb,
    $M^4$ is selected from one or more of Ni, Co, Fe, Mn, Sn, Cr, V, Mo, and Nb,
    $M^5$ is selected from one or more of Ni, Co, Fe, Mn, Sn, Cr, and Mo,
    $M^6$ is selected from one or more of Ni, Co, and Mn, and
    the valence state of each element of $M^1$, $M^3$, $M^4$, $M^5$ and $M^6$ is lower than its own highest oxidation valence state, respectively;

    the electrolyte comprises an electrolyte lithium salt and a solvent, the electrolyte lithium salt selected from one or more of a combination of $LiPF_6$ and an organic lithium salt, a combination of $LiBF_4$ and an organic lithium salt, and an organic lithium salt; and
    the electrolyte has a percentage, $\varepsilon$, of the total mass of a fluorine element in the anions of the electrolyte lithium salt relative to the total mass of the electrolyte, where $\varepsilon$ satisfies $0.5\% \leq \varepsilon < 14\%$, optionally $1.5\% \leq \varepsilon \leq 9.5\%$.

2.  The lithium ion secondary battery (5) according to claim 1, wherein $2\% \leq \varepsilon \leq 9.3\%$; optionally $2.5\% \leq \varepsilon \leq 9.2\%$.

3.  The lithium ion secondary battery (5) according to claim 1 or 2, wherein the lithium-rich metal oxide comprises one or more of $Li_2MnO_2$, $Li_5FeO_4$, $Li_6CoO_4$, $Li_2NiO_2$, and $Li_2Cu_{x1}Ni_{1-x1-y1}M_{y1}O_2$, and optionally one or more of $Li_3VO_4$ and $Li_3NbO_4$, in which $0 < x1 \leq 1$, $0 \leq y1 < 0.1$, and M is selected from one or more of Zn, Sn, Mg, Fe, and Mn; optionally $0.2 \leq x1 \leq 0.8$, or $0.4 \leq x1 \leq 0.6$, and/or
    wherein the lithium-rich metal oxide contains free lithium including one or more of LiOH, $LiHCO_3$, and $Li_2CO_3$, and the mass percentage, $\omega$, of the free lithium in the lithium-rich metal oxide is $\leq 5$ wt%; optionally, $\omega \leq 3$ wt%; and further optionally, $0.3$ wt% $\leq \omega \leq 0.7$ wt%.

4.  The lithium ion secondary battery (5) according to any one of claims 1-3, wherein at least part of the outer surface of the lithium-rich metal oxide has a coating layer, and the coating layer comprises one or more of a metal fluoride, an oxide, a metal phosphate, a carbon material, and a conductive polymer; optionally, the metal fluoride is selected from $AlF_3$; the oxide is selected from one or more of $V_2O_5$, $Al_2O_3$, $ZrO_2$, $TiO_2$, ZnO, $SiO_2$, and $B_2O_3$; and the metal phosphate is selected from one or more of $AlPO_4$, $FePO_4$, $Co_3(PO_4)_2$, and $Ni_3(PO_4)_2$.

5.  The lithium ion secondary battery (5) according to any one of claims 1-4, wherein the electrolyte lithium salt comprise one or more selected from lithium difluorooxalate borate (LiDFOB), lithium bisoxalate borate (LiBOB), lithium difluorophosphate (LiDFP), lithium difluorodioxalate phosphate (LiDFOP), lithium tetrafluorooxalate phosphate (LiTFOP), lithium bisfluorosulfonimide (LiFSI), lithium bistrifluoromethanesulfonimide (LiTFSI), lithium tetrafluoroborate ($LiBF_4$), lithium trifluoromethanesulfonate ($LiCF_3SO_3$), lithium bis(trifluoromethylsulfonyl) methide ($LiCH(CF_3SO_2)_2$), lithium tris(trifluoromethylsulfonyl) methide ($LiC(CF_3SO_2)_3$), and optionally comprising lithium hexafluorophosphate ($LiPF_6$);
    optionally, the electrolyte lithium salt may comprise one or more of lithium bisoxalate borate (LiBOB), lithium difluorodioxalate phosphate (LiDFOP), and lithium bisfluorosulfonimide (LiFSI).

6.  The lithium ion secondary battery (5) according to any one of claims 1-5, wherein the electrolyte satisfies:
    the concentration of the electrolyte lithium salt in the electrolyte is 0.7 mol/L-4 mol/L, optionally 0.7 mol/L-3 mol/L;
    optionally, the concentration of $LiPF_6$ in the electrolyte is $\leq 0.4$ mol/L.

7.  The lithium ion secondary battery (5) according to any one of claims 1-6, wherein the positive electrode active material is selected from one or more of $Li_zCoO_2$, $Li_zNiO_2$, $Li_zMnO_2$, $Li_zMn_2O_4$, $Li_zNi_aCo_bMn_cM'_dO_2$, $Li_zNi_{1-u}Co_uO_2$, $Li_zCo_{1-}$

$_u$Mn$_u$O$_2$, Li$_z$Ni$_{1-u}$Mn$_u$O$_2$, Li$_z$Ni$_\alpha$Co$_\beta$Mn$_\gamma$O$_4$, Li$_z$Mn$_{2-\eta}$Ni$_\eta$O$_4$, Li$_z$Mn$_{2-\eta}$Co$_\eta$O$_4$, Li$_z$FePO$_4$, Li$_z$CoPO$_4$, Li$_z$MnPO$_4$, and modified materials thereof, in which M' is selected from one or more of Al, Mo, Nd, and Zn, z independently satisfies $0.5 \leq z \leq 1.3$, $0 < a < 1$, $0 < b < 1$, $0 < c < 1$, $0 \leq d < 1$, $a + b + c + d = 1$, u independently satisfies $0 < u < 1$, $0 < \alpha < 2$, $0 < \beta < 2$, $0 < \gamma < 2$, $\alpha + \beta + \gamma = 2$, and $\eta$ independently satisfies $0 < \eta < 2$, and/or

wherein the positive electrode active material comprises one or more of Li$_z$FePO$_4$ and modified materials thereof, in which $0.5 \leq z \leq 1.3$, optionally $0.9 \leq z \leq 1.2$, or $z = 1$; and optionally, the positive electrode active material is comprised in a positive electrode active material layer of the positive electrode plate, and the positive electrode active material layer has an areal density of $\geq$ 18 mg/cm$^2$, further optionally 18 mg/cm$^2$-21 mg/cm$^2$.

8. The lithium ion secondary battery (5) according to any one of claims 1-7, wherein the positive electrode active material comprises one or more of Li$_z$Ni$_a$Co$_b$Mn$_c$M'$_d$O$_2$ and modified materials thereof, in which $0.5 \leq z \leq 1.3$, $0.5 \leq a < 1$, $0 < b \leq 0.2$, $0 < c \leq 0.3$, $0 \leq d < 1$, and M' is selected from one or more of Al, Mo, Nd, and Zn.

9. The lithium ion secondary battery (5) according to any one of claims 1-7, wherein the positive electrode plate comprises a positive electrode current collector and a positive electrode active material layer provided on the positive electrode current collector, the positive electrode active material layer comprises the positive electrode active material; wherein

the positive electrode lithium-supplementing material is uniformly distributed in the positive electrode active material layer, and/or
the positive electrode lithium-supplementing material is provided between the positive electrode current collector and the positive electrode active material layer in the form of a lithium-supplementing film layer, and/or
the positive electrode lithium-supplementing material is provided on the surface of the positive electrode active material layer away from the positive electrode current collector in the form of a lithium-supplementing film layer.

10. The lithium ion secondary battery (5) according to claim 9, wherein on at least one side of the positive electrode current collector, the mass ratio of the positive electrode active material to the positive electrode lithium-supplementing material is 99.9 : 0.1 - 85 : 15, optionally 98.5 : 1.5 - 93 : 7, and further optionally 98 : 2 - 95 : 5.

11. A method for preparing a lithium ion secondary battery (5), comprising the steps of:
providing a positive electrode plate, wherein the positive electrode plate comprises a positive electrode active material and a positive electrode lithium-supplementing material comprising a lithium-rich metal oxide, and the lithium-rich metal oxide is selected from one or more of Li$_x$M$^1$O$_{0.5(2+x)}$, Li$_2$M$^3$O$_4$, Li$_3$M$^4$O$_4$, Li$_5$M$^5$O$_4$, and Li$_5$M$^6$O$_6$, where:

$$x \geq 1,$$

M$^1$ is selected from one or more of Ni, Co, Fe, Mn, Zn, Mg, Ca, Cu and Sn,
M$^3$ is selected from one or more of Ni, Co, Fe, Mn, Sn, Cr, V, and Nb,
M$^4$ is selected from one or more of Ni, Co, Fe, Mn, Sn, Cr, V, Mo, and Nb,
M$^5$ is selected from one or more of Ni, Co, Fe, Mn, Sn, Cr, and Mo,
M$^6$ is selected from one or more of Ni, Co, and Mn, and
the valence state of each element of M$^1$, M$^3$, M$^4$, M$^5$ and M$^6$ is lower than its own highest oxidation valence state, respectively;
providing an electrolyte, wherein the electrolyte comprises an electrolyte lithium salt and a solvent, the electrolyte lithium salt selected from one or more of a combination of LiPF$_6$ and an organic lithium salt, a combination of LiBF$_4$ and an organic lithium salt, and an organic lithium salt, and the electrolyte has a percentage, $\varepsilon$, of the total mass of a fluorine element in the anions of the electrolyte lithium salt relative to the total mass of the electrolyte, where $\varepsilon$ satisfies $0.5\% \leq \varepsilon < 14\%$, optionally $1.5\% \leq \varepsilon \leq 9.5\%$; and
assembling the positive electrode plate, a negative electrode plate and the electrolyte to obtain a lithium ion secondary battery (5).

12. A battery module (4), comprising a lithium ion secondary battery (5) according to any one of claims 1-10 or a lithium ion secondary battery (5) obtained by a preparation method according to claim 11.

13. A battery pack, comprising a battery module (4) according to claim 12.

14. A device, comprising at least one of a lithium ion secondary battery (5) according to any one of claims 1-10, a lithium ion secondary battery (5) obtained by a preparation method according to claim 11, a battery module (4) according to claim 12, or a battery pack according to claim 13.

**Patentansprüche**

1. Lithium-Ionen-Sekundärbatterie (5), umfassend eine positive Elektrodenplatte, eine negative Elektrodenplatte und einen Elektrolyten, wobei
die positive Elektrodenplatte ein positives Elektroden-Aktivmaterial und ein Lithium-ergänzende Material der positiven Elektrode umfasst, umfassend ein lithiumreiches Metalloxid, und das lithiumreiche Metalloxid aus einem oder mehreren von $Li_xM^1O_{0,5(2+x)}$, $Li_2M^3O_4$, $Li_3M^4O_4$, $Li_5M^5O_4$ und $Li_5M^6O_6$ ausgewählt ist, wobei:

$$x \geq 1,$$

$M^1$ aus einem oder mehreren von Ni, Co, Fe, Mn, Zn, Mg, Ca, Cu und Sn ausgewählt ist,
$M^3$ aus einem oder mehreren von Ni, Co, Fe, Mn, Sn, Cr, V und Nb ausgewählt ist,
$M^4$ aus einem oder mehreren von Ni, Co, Fe, Mn, Sn, Cr, V, Mo und Nb ausgewählt ist,
$M^5$ aus einem oder mehreren von Ni, Co, Fe, Mn, Sn, Cr und Mo ausgewählt ist,
$M^6$ aus einem oder mehreren von Ni, Co und Mn ausgewählt ist und
der Valenzzustand jedes Elements von $M^1$, $M^3$, $M^4$, $M^5$ und $M^6$ jeweils niedriger ist als sein eigener höchster Oxidationsvalenzzustand;
der Elektrolyt ein Elektrolyt-Lithiumsalz und ein Lösungsmittel umfasst, wobei das Elektrolyt-Lithiumsalz aus einer oder mehreren einer Kombination aus $LiPF_6$ und einem organischen Lithiumsalz, einer Kombination aus $LiBF_4$ und einem organischen Lithiumsalz und einem organischen Lithiumsalz ausgewählt ist; und
der Elektrolyt einen Prozentsatz, $\varepsilon$, der Gesamtmasse eines Fluorelements in den Anionen des Elektrolyt-Lithiumsalzes relativ zur Gesamtmasse des Elektrolyten aufweist, wobei $\varepsilon$ 0,5 % $\leq \varepsilon \leq$ 14 %, wahlweise 1,5 % $\leq \varepsilon \leq$ 9,5 % erfüllt.

2. Lithium-Ionen-Sekundärbatterie (5) nach Anspruch 1, wobei 2 % $\leq \varepsilon \leq$ 9,3 %, wahlweise 2,5 % $\leq \varepsilon \leq$ 9,2 %.

3. Lithium-Ionen-Sekundärbatterie (5) nach Anspruch 1 oder 2, wobei das lithiumreiche Metalloxid eines oder mehrere von $Li_2MnO_2$, $Li_5FeO_4$, $Li_6CoO_4$, $Li_2NiO_2$ und $Li_2Cu_{xi}Ni_{1-x1-y1}M_{yi}O_2$ und, wahlweise, eines oder mehrere von $Li_3VO_4$ und $Li_3NbO_4$ umfasst, bei denen 0 < xl $\leq$ 1, 0 $\leq$ y1 < 0,1 ist, und M aus einem oder mehreren von Zn, Sn, Mg, Fe und Mn ausgewählt ist; wahlweise 0,2 $\leq$ xl $\leq$ 0,8 oder 0,4 $\leq$ xl $\leq$ 0,6, und/oder
wobei das lithiumreiche Metalloxid freies Lithium enthält, einschließlich eines oder mehrerer von LiOH, $LiHCO_3$ und $Li_2CO_3$, und der Massenanteil, $\omega$, des freien Lithiums in dem lithiumreichen Metalloxid $\leq$ 5 Gew.-% beträgt; wahlweise $\omega \leq$ 3 Gew.-%; und ferner wahlweise 0,3 Gew.-% $\leq \omega \leq$ 0,7 Gew.-%.

4. Lithium-Ionen-Sekundärbatterie (5) nach einem der Ansprüche 1 bis 3, wobei mindestens ein Teil der Außenfläche des lithiumreichen Metalloxids eine Überzugsschicht aufweist und die Überzugsschicht eines oder mehrere von einem Metallfluorid, einem Oxid, einem Metallphosphat, einem Kohlenstoffmaterial und einem leitfähigen Polymer umfasst; wahlweise, das Metallfluorid aus $AlF_3$ ausgewählt ist; das Oxid aus einem oder mehreren von $V_2O_5$, $Al_2O_3$, $ZrO_2$, $TiO_2$, ZnO, $SiO_2$ und $B_2O_3$ ausgewählt ist; und das Metallphosphat aus einem oder mehreren von $AlPO_4$, $FePO_4$, $Co_3(PO_4)_2$ und $Ni_4(PO_4)_2$ ausgewählt ist.

5. Lithium-Ionen-Sekundärbatterie (5) nach einem der Ansprüche 1 bis 4, wobei das Elektrolyt-Lithiumsalz eines oder mehrere aus Lithiumdifluor(oxalato)borat (LiDFOB), Lithiumbis(oxalato)borat (LiBOB), Lithiumdifluorophosphat (LiDFP), Lithiumdifluoro(dioxalato)phosphat (LiDFOP), Lithiumtetrafluoro(oxalato)phosphat (LiTFOP), Lithiumbisfluorsulfonimid (LiFSI), Lithiumbistrifluormethansulfonimid (LiTFSI), Lithiumtetrafluorborat ($LiBF_4$), Lithiumtrifluormethansulfonat ($LiCF_3SO_3$), Lithiumbis(trifluormethylsulfonyl)methid ($LiCH(CF_3SO_2)_2$), Lithiumtris(trifluormethylsulfonyl)methid ($LiC(CF_3SO_2)_3$) und, wahlweise, Lithiumhexafluorophosphat (LiPFe) ausgewählte Salze umfasst; wahlweise, das Elektrolyt-Lithiumsalz eines oder mehrere von Lithiumbis(oxalato)borat (LiBOB), Lithiumdifluoro(dioxalato)phosphat (LiDFOP) und Lithiumbisfluorsulfonimid (LiFSI) umfassen kann.

6. Lithium-Ionen-Sekundärbatterie (5) nach einem der Ansprüche 1 bis 5, wobei der Elektrolyt folgendes erfüllt:
die Konzentration des Elektrolyt-Lithiumsalzes im Elektrolyten ist 0,7 mol/l bis 4 mol/l, wahlweise 0,7 mol/l bis 3 mol/l;
wahlweise, die Konzentration von $LiPF_6$ im Elektrolyten ist $\leq$ 0,4 mol/l.

7. Lithium-Ionen-Sekundärbatterie (5) nach einem der Ansprüche 1 bis 6, wobei das positive Elektroden-Aktivmaterial aus einem oder mehreren von $Li_zCoO_2$, $Li_zNiO_2$, $Li_zMnO_2$, $Li_zMn_2O_4$, $Li_zNi_aCo_bMn_cM'_dO_2$, $Li_zNi_{1-u}Co_uO_2$, $Li_zCo_{1-u}Mn_uO_2$, $Li_zNi_{1-u}Mn_uO_2$, $Li_zNi_\alpha Co_\beta Mn_\gamma O_4$, $Li_zMn_{2-\eta}Ni_\eta O_4$, $Li_zMn_{2-\eta}Co_\eta O_4$, $Li_zFePO_4$, $Li_zCoPO_4$, $Li_zMnPO_4$ und modifizierten Materialien davon ausgewählt ist, wobei M' aus einem oder mehreren von Al, Mo, Nd und Zn ausgewählt ist, z unabhängig $0,5 \leq z \leq 1,3$, $0 < a < 1$, $0 < b < 1$, $0 < c < 1$, $0 \leq d < l$, $a + b + c + d = l$, erfüllt, u unabhängig $0 < u < l$, $0 < \alpha < 2$, $0 < \beta < 2$, $0 < \gamma < 2$, $\alpha + \beta + \gamma = 2$, erfüllt und $\eta$ unabhängig $0 < \eta < 2$ erfüllt, und/oder
wobei das positive Elektroden-Aktivmaterial eines oder mehrere von $Li_zFePO_4$ und modifizierten Materialien davon umfasst, wobei $0,5 \leq z \leq 1,3$, wahlweise $0,9 \leq z \leq 1,2$ oder $z = 1$, ist; und, wahlweise, das positive Elektroden-Aktivmaterial in einer Schicht des positiven Elektroden-Aktivmaterials der positiven Elektrodenplatte enthalten ist und die Schicht des positiven Elektroden-Aktivmaterials eine Flächendichte von $\geq 18$ mg/cm$^2$, ferner wahlweise 18 mg/cm$^2$ bis 21 mg/cm$^2$, aufweist.

8. Lithium-Ionen-Sekundärbatterie (5) nach einem der Ansprüche 1 bis 7, wobei das positive Elektroden-Aktivmaterial eines oder mehrere von $Li_zNi_aCo_bMn_c M'_dO_2$ und modifizierten Materialien davon umfasst, wobei $0,5 \leq z \leq 1,3$, $0,5 \leq a < 1$, $0 < b \leq 0,2$, $0 < c \leq 0,3$, $0 \leq d < 1$ und M' aus einem oder mehreren von Al, Mo, Nd und Zn ausgewählt ist.

9. Lithium-Ionen-Sekundärbatterie (5) nach einem der Ansprüche 1 bis 7, wobei die positive Elektrodenplatte einen Stromabnehmer der positiven Elektrode und eine auf dem Stromabnehmer der positiven Elektrode vorgesehene Schicht des positiven Elektroden-Aktivmaterials umfasst, wobei die Schicht des positiven Elektroden-Aktivmaterials das positive Elektroden-Aktivmaterial umfasst; wobei

das Lithium-ergänzende Material der positiven Elektrode gleichmäßig in der Schicht des positiven Elektroden-Aktivmaterials verteilt ist und/oder
das Lithium-ergänzende Material der positiven Elektrode zwischen dem Stromabnehmer der positiven Elektrode und der Schicht des positiven Elektroden-Aktivmaterials in Form einer Lithium-ergänzenden Filmschicht vorgesehen ist, und/oder
das Lithium-ergänzende Material der positiven Elektrode auf der dem Stromabnehmer der positiven Elektrode abgekehrten Oberfläche der Schicht des positiven Elektroden-Aktivmaterials in Form einer Lithium-ergänzenden Filmschicht vorgesehen ist.

10. Lithium-Ionen-Sekundärbatterie (5) nach Anspruch 9, wobei auf mindestens einer Seite des Stromabnehmers der positiven Elektrode das Massenverhältnis des positiven Elektroden-Aktivmaterials zum Lithium-ergänzenden Material der positiven Elektrode 99,9 : 0,1 bis 85 : 15, wahlweise 98,5 : 1,5 bis 93 : 7 und ferner wahlweise 98 : 2 bis 95 : 5 beträgt.

11. Verfahren zur Herstellung einer Lithium-Ionen-Sekundärbatterie (5), umfassend die folgenden Schritte:
Bereitstellen einer positiven Elektrodenplatte, wobei die positive Elektrodenplatte ein positives Elektroden-Aktivmaterial und ein Lithium-ergänzende Material der positiven Elektrode umfasst, umfassend ein lithiumreiches Metalloxid, und das lithiumreiche Metalloxid aus einem oder mehreren von $Li_xM^1O_{0,5(2+x)}$, $Li_2M^3O_4$, $Li_3M^4O_4$, $Li_5M^5O_4$ und $Li_5M^6O_6$ ausgewählt ist, wobei:

$$x \geq 1,$$

$M^1$ aus einem oder mehreren von Ni, Co, Fe, Mn, Zn, Mg, Ca, Cu und Sn ausgewählt ist,
$M^3$ aus einem oder mehreren von Ni, Co, Fe, Mn, Sn, Cr, V und Nb ausgewählt ist,
$M^4$ aus einem oder mehreren von Ni, Co, Fe, Mn, Sn, Cr, V, Mo und Nb ausgewählt ist,
$M^5$ aus einem oder mehreren von Ni, Co, Fe, Mn, Sn, Cr und Mo ausgewählt ist,
$M^6$ aus einem oder mehreren von Ni, Co und Mn ausgewählt ist und
der Valenzzustand jedes Elements von $M^1$, $M^3$, $M^4$, $M^5$ und $M^6$ jeweils niedriger ist als sein eigener höchster Oxidationsvalenzzustand;
Bereitstellen eines Elektrolyten, wobei der Elektrolyt ein Elektrolyt-Lithiumsalz und ein Lösungsmittel umfasst, wobei das Elektrolyt-Lithiumsalz aus einer oder mehreren von einer Kombination aus $LiPF_6$ und einem organischen Lithiumsalz, einer Kombination aus $LiBF_4$ und einem organischen Lithiumsalz und einem organischen Lithiumsalz ausgewählt ist und der Elektrolyt einen Prozentsatz, $\varepsilon$, der Gesamtmasse eines Fluorelements in den Anionen des Elektrolyt-Lithiumsalzes relativ zur Gesamtmasse des Elektrolyten aufweist, wobei $\varepsilon$ 0,5 % $\leq \varepsilon \leq 14$ %, wahlweise 1,5 % $\leq \varepsilon \leq 9,5$ %, erfüllt; und
Zusammenbauen der positiven Elektrodenplatte, einer negativen Elektrodenplatte und des Elektrolyten, um eine Lithium-Ionen-Sekundärbatterie (5) zu erhalten.

12. Batteriemodul (4), umfassend eine Lithium-Ionen-Sekundärbatterie (5) nach einem der Ansprüche 1 bis 10 oder eine durch ein Herstellungsverfahren nach Anspruch 11 erhaltene Lithium-Ionen-Sekundärbatterie (5).

13. Akkupack, umfassend ein Batteriemodul (4) nach Anspruch 12.

14. Vorrichtung, umfassend mindestens eines von einer Lithium-Ionen-Sekundärbatterie (5) nach einem der Ansprüche 1 bis 10, einer durch ein Herstellungsverfahren nach Anspruch 11 erhaltenen Lithium-Ionen-Sekundärbatterie (5), einem Batteriemodul (4) nach Anspruch 12 oder einem Akkupack nach Anspruch 13.

**Revendications**

1. Batterie rechargeable aux ions lithium (5), comprenant une plaque d'électrode positive, une plaque d'électrode négative et un électrolyte, dans laquelle

   la plaque d'électrode positive comprend un matériau actif d'électrode positive et un matériau de supplémentation en lithium d'électrode positive comprenant un oxyde métallique riche en lithium, et l'oxyde métallique riche en lithium étant sélectionné parmi au moins l'un de $Li_xM^1O_{0.5(2+x)}$, $Li_2M^3O_4$, $Li_3M^4O_4$, $Li_5M^5O_4$ et $Li_5M^6O_6$, dans lesquelles :

$$x \geq 1,$$

   $M^1$ est sélectionné parmi un ou plusieurs de Ni, Co, Fe, Mn, Zn, Mg, Ca, Cu et Sn,
   $M^3$ est sélectionné parmi un ou plusieurs de Ni, Co, Fe, Mn, Sn, Cr, V et Nb,
   $M^4$ est sélectionné parmi un ou plusieurs de Ni, Co, Fe, Mn, Sn, Cr, V, Mo et Nb,
   $M^5$ est sélectionné parmi un ou plusieurs de Ni, Co, Fe, Mn, Sn, Cr et Mo,
   $M^6$ est sélectionné parmi un ou plusieurs de Ni, Co et Mn, et
   l'état de valence de chaque élément parmi $M^1$, $M^3$, $M^4$, $M^5$ et $M^6$ est inférieur à son propre état de valence d'oxydation le plus élevé, respectivement ;
   l'électrolyte comprend un sel de lithium d'électrolyte et un solvant, le sel de lithium d'électrolyte est sélectionné parmi un ou plusieurs parmi une combinaison de $LiPF_6$ et d'un sel de lithium organique, une combinaison de $LiBF_4$ et d'un sel de lithium organique, et un sel de lithium organique ; et
   l'électrolyte a un pourcentage, $\varepsilon$, de la masse totale d'un élément fluor dans les anions du sel de lithium d'électrolyte par rapport à la masse totale de l'électrolyte, où $\varepsilon$ satisfait 0,5 % $\leq \varepsilon <$ 14 %, éventuellement 1,5 % $\leq \varepsilon \leq$ 9,5 %.

2. Batterie rechargeable aux ions lithium (5) selon la revendication 1, dans laquelle 2 % $\leq \varepsilon \leq$ 9,3 % ; éventuellement 2,5 % $\leq \varepsilon \leq$ 9,2 %.

3. Batterie rechargeable aux ions lithium (5) selon la revendication 1 ou 2, dans laquelle l'oxyde métallique riche en lithium comprend un ou plusieurs parmi $Li_2MnO_2$, $Li_5FeO_4$, $Li_6CoO_4$, $Li_2NiO_2$ et $Li_2Cu_{x1}Ni_{1-x1-y1}M_{y1}O_2$, et éventuellement un ou plusieurs parmi $Li_3VO_4$ et $Li_3NbO_4$, dans lesquels 0 < x1 $\leq$ 1, 0 $\leq$ y1 < 0,1, et M est sélectionné parmi un ou plusieurs de Zn, Sn, Mg, Fe et Mn ; éventuellement 0,2 $\leq$ x1 $\leq$ 0,8, ou 0,4 $\leq$ x1 $\leq$ 0,6, et/ou
   dans laquelle l'oxyde métallique riche en lithium contient du lithium libre incluant un ou plusieurs parmi $LiOH$, $LiHCO_3$ et $Li_2CO_3$, et le pourcentage massique, $\omega$, du lithium libre dans l'oxyde métallique riche en lithium est $\leq$ 5 % en poids ; éventuellement, $\omega \leq$ 3 % en poids ; et encore éventuellement, 0,3 % en poids $\leq \omega \leq$ 0,7 % en poids.

4. Batterie rechargeable aux ions lithium (5) selon l'une quelconque des revendications 1 à 3, dans laquelle au moins une partie de la surface externe de l'oxyde métallique riche en lithium comporte une couche de revêtement, et la couche de revêtement comprend un ou plusieurs d'un fluorure de métal, d'un oxyde, d'un phosphate de métal, d'un matériau carboné, et d'un polymère conducteur ; éventuellement, le fluorure de métal est sélectionné parmi $AlF_3$ ; l'oxyde est sélectionné parmi un ou plusieurs de $V_2O_5$, $Al_2O_3$, $ZrO_2$, $TiO_2$, $ZnO$, $SiO_2$ et $B_2O_3$ ; et le phosphate de métal est sélectionné parmi un ou plusieurs de $AlPO_4$, $FePO_4$, $Co_3(PO_4)_2$ et $Ni_3(PO_4)_2$.

5. Batterie rechargeable aux ions lithium (5) selon l'une quelconque des revendications 1 à 4, dans laquelle le sel de lithium d'électrolyte comprend un ou plusieurs sélectionnés parmi le difluoro(oxalato)borate de lithium (LiDFOB), le bis(oxalato)borate de lithium (LiBOB), le difluorophosphate de lithium (LiDFP), le difluorodioxalate phosphate de lithium (LiDFOP), le tétrafluorooxalate phosphate de lithium (LiTFOP), le bisfluorosulfonimide de lithium (LiFSI), le bistrifluorométhanesulfonimide de lithium (LiTFSI), le tétrafluoroborate de lithium ($LiBF_4$), le trifluorométhanesulfonate de lithium ($LiCF_3SO_3$), le bis(trifluorométhylsulfonyl) méthide de lithium ($LiCH(CF_3SO_2)_2$), le tris(trifluorométhylsulfonyl) méthide de lithium ($LiC(CF_3SO_2)_3$), et comprend éventuellement de l'hexafluorophosphate de lithium ($LiPF_6$) ;
éventuellement, le sel d'électrolyte de lithium peut comprendre un ou plusieurs du bis(oxalato)borate de lithium (LiBOB), du difluorodioxalate phosphate de lithium (LiDFOP), et du bisfluorosulfonimide de lithium (LiFSI).

6. Batterie rechargeable aux ions lithium (5) selon l'une quelconque des revendications 1 à 5, dans laquelle l'électrolyte satisfait :
la concentration du sel de lithium d'électrolyte dans l'électrolyte est de 0,7 mol/L à 4 mol/L, éventuellement de 0,7 mol/L à 3 mol/L ; éventuellement, la concentration de $LiPF_6$ dans l'électrolyte est $\leq$ 0,4 mol/L.

7. Batterie rechargeable aux ions lithium (5) selon l'une quelconque des revendications 1 à 6, dans laquelle le matériau actif d'électrode positive est sélectionné parmi un ou plusieurs de $Li_zCoO_2$, $Li_zNiO_2$, $Li_zMnO_2$, $Li_zMn_2O_4$, $Li_zNi_a$-$Co_bMn_cM'_dO_2$, $Li_zNi_{1-u}Co_uO_2$, $Li_zCo_{1-u}Mn_uO_3$, $Li_zNi_{1-u}Mn_uO_2$, $Li_zNi_\alpha Co_\beta Mn_\gamma O_4$, $Li_zMn_{2-\eta}Ni_\eta O_4$, $Li_zMn_{2-\eta}Co_\eta O_4$, $Li_zFePO_4$, $Li_zCoPO_4$, $Li_zMnPO_4$, et des matériaux modifiés associés, dans lesquelles M' est sélectionné parmi un ou plusieurs de Al, Mo, Nd et Zn, z satisfait indépendamment $0,5 \leq z \leq 1,3$, $0 < a < 1$, $0 < b < 1$, $0 < c < 1$, $0 \leq d < 1$, $a + b + c + d = 1$, u satisfait indépendamment $0 < u < 1$, $0 < \alpha < 2$, $0 < \beta < 2$, $0 < y < 2$, $\alpha + \beta + \gamma = 2$ et $\eta$ satisfait indépendamment $0 < \eta < 2$, et/ou
dans laquelle le matériau actif d'électrode positive comprend un ou plusieurs parmi $Li_zFePO_4$ et des matériaux modifiés associés, dans lesquels $0,5 \leq z \leq 1,3$, éventuellement $0,9 \leq z \leq 1,2$, ou z = 1 ; et éventuellement, le matériau actif d'électrode positive est compris dans une couche de matériau actif d'électrode positive de la plaque d'électrode positive, et la couche de matériau actif d'électrode positive a une densité surfacique $\geq$ 18 mg/cm$^2$, éventuellement encore de 18 mg/cm$^2$ à 21 mg/cm$^2$.

8. Batterie rechargeable aux ions lithium (5) selon l'une quelconque des revendications 1 à 7, dans laquelle le matériau actif d'électrode positive comprend un ou plusieurs parmi $Li_zNi_aCo_bMn_cM'_dO_2$ et des matériaux modifiés associés, dans lesquels $0,5 \leq z \leq 1,3$, $0,5 \leq a < 1$, $0 < b \leq 0,2$, $0 < c \leq 0,3$, $0 \leq d < 1$, et M' est sélectionné parmi un ou plusieurs de Al, Mo, Nd et Zn.

9. Batterie rechargeable aux ions lithium (5) selon l'une quelconque des revendications 1 à 7, dans laquelle la plaque d'électrode positive comprend un collecteur de courant d'électrode positive et une couche de matériau actif d'électrode positive disposée sur le collecteur de courant d'électrode positive, la couche de matériau actif d'électrode positive comprend le matériau actif d'électrode positive ; dans laquelle

le matériau de supplémentation en lithium d'électrode positive est uniformément réparti dans la couche de matériau actif d'électrode positive, et/ou
le matériau de supplémentation en lithium d'électrode positive est disposé entre le collecteur de courant d'électrode positive et la couche de matériau actif d'électrode positive sous la forme d'une couche de film de supplémentation en lithium, et/ou
le matériau de supplémentation en lithium d'électrode positive est disposé sur la surface de la couche de matériau actif d'électrode positive à distance du collecteur de courant d'électrode positive sous la forme d'une couche de film de supplémentation en lithium.

10. Batterie rechargeable aux ions lithium (5) selon la revendication 9, dans laquelle sur au moins un côté du collecteur de courant d'électrode positive, le rapport massique du matériau actif d'électrode positive au matériau de supplémentation en lithium d'électrode positive est de 99,9:0,1 à 85:15, éventuellement de 98,5:1,5 à 93:7, et éventuellement encore de 98:2 à 95:5.

11. Procédé de préparation d'une batterie rechargeable aux ions lithium (5), comprenant les étapes consistant à :
fournir une plaque d'électrode positive, la plaque d'électrode positive comprenant un matériau actif d'électrode positive et un matériau de supplémentation en lithium d'électrode positive comprenant un oxyde métallique riche en lithium, et l'oxyde métallique riche en lithium étant sélectionné parmi au moins l'un de $Li_xM^1O_{0.5(2+x)}$, $Li_2M^3O_4$, $Li_3M^4O_4$, $Li_5M^5O_4$ et $Li_5M^6O_6$, dans lesquelles :

$$x \geq 1,$$

$M^1$ est sélectionné parmi un ou plusieurs de Ni, Co, Fe, Mn, Zn, Mg, Ca, Cu et Sn,

$M^3$ est sélectionné parmi un ou plusieurs de Ni, Co, Fe, Mn, Sn, Cr, V et Nb,

$M^4$ est sélectionné parmi un ou plusieurs de Ni, Co, Fe, Mn, Sn, Cr, V, Mo et Nb,

$M^5$ est sélectionné parmi un ou plusieurs de Ni, Co, Fe, Mn, Sn, Cr et Mo,

$M^6$ est sélectionné parmi un ou plusieurs de Ni, Co et Mn, et

l'état de valence de chaque élément parmi $M^1$, $M^3$, $M^4$, $M^5$ et $M^6$ est inférieur à son propre état de valence d'oxydation le plus élevé, respectivement ;

fournir un électrolyte, l'électrolyte comprenant un sel de lithium d'électrolyte et un solvant, le sel de lithium d'électrolyte est sélectionné parmi un ou plusieurs d'une combinaison de $LiPF_6$ et d'un sel de lithium organique, d'une combinaison de $LiBF_4$ et d'un sel de lithium organique, et d'un sel de lithium organique, et l'électrolyte a un pourcentage, $\varepsilon$, de la masse totale d'un élément fluor dans les anions du sel de lithium d'électrolyte par rapport à la masse totale de l'électrolyte, où $\varepsilon$ satisfait 0,5 % $\leq \varepsilon <$ 14 %, éventuellement 1,5 % $\leq \varepsilon \leq$ 9,5 % ; et

assembler la plaque d'électrode positive, une plaque d'électrode négative et l'électrolyte pour obtenir une batterie rechargeable aux ions lithium (5).

**12.** Module de batterie (4), comprenant une batterie rechargeable aux ions lithium (5) selon l'une quelconque des revendications 1 à 10 ou une batterie rechargeable aux ions lithium (5) obtenue par un procédé de préparation selon la revendication 11.

**13.** Bloc-batterie, comprenant un module de batterie (4) selon la revendication 12.

**14.** Dispositif, comprenant au moins l'un d'une batterie rechargeable aux ions lithium (5) selon l'une quelconque des revendications 1 à 10, une batterie rechargeable aux ions lithium (5) obtenue par un procédé de préparation selon la revendication 11, un module de batterie (4) selon la revendication 12, ou un bloc-batterie selon la revendication 13.

**5**

*FIG. 1*

**5**

*FIG. 2*

**4**

*FIG. 3*

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007141468 A1
- CN 109546115 A
- WO 2016123396 A1
- CN 110224169 A
- CN 107706351 A
- CN 107978794 A
- CN 105552344 A
- CN 109888394 A
- CN 110993939 A
- CN 108682894 A
- CN 110993933 A
- CN 104638299 A

**Non-patent literature cited in the description**

- Improved Electrochemical Performance of LiMO2 (M=Mn, Ni, Co)-Li2MnO3 Cathode Materials in Ionic Liquid-based Electrolyte. *Journal of Power Sources*, 15 April 2013, vol. 239
- Higher Energy and Safety of Lithium-Ion Batteries with Ionic Liquid Electrolyte. *Proceedings of SPIE, Visual Communications and Image*, 29 April 2010, vol. 2005